# EUROPÄISCHE PATENTSCHRIFT

(11) **EP 2 625 315 B1**
(45) Veröffentlichungstag und Bekanntmachung des Hinweises auf die Patenterteilung: **30.09.2015**
(21) Anmeldenummer: 11779080.8
(22) Anmeldetag: 03.10.2011
(51) Int. Cl.: C25B 1/00, C25B 9/10, B01D 53/32, B01J 35/00

(54) **PHOTOELEKTROCHEMISCHE ZELLE UND VERFAHREN ZUR SOLARBETRIEBENEN ZERLEGUNG EINES AUSGANGSSTOFFS**
PHOTOELECTROCHEMICAL CELL AND METHOD FOR THE SOLAR-DRIVEN DECOMPOSITION OF A STARTING MATERIAL
CELLULE PHOTOÉLECTROCHIMIQUE ET PROCÉDÉ DE DÉCOMPOSITION D'UNE SUBSTANCE DE BASE À L'AIDE DE L'ÉNERGIE SOLAIRE

(30) Priorität: 04.10.2010 AT 16552010
(43) Veröffentlichungstag der Anmeldung: 14.08.2013
(73) Patentinhaber: NOVAPECC GMBH, 1010 Wien (AT)
(72) Erfinder: FLEIG, Jürgen, A-2500 Baden (AT); AHRENS, Martin, A-1050 Wien (AT); PONWEISER, Karl, A-2700 Wiener Neustadt (AT); HAIDER, Markus, A-1130 Wien (AT); BRUNAUER, GEORG, A-2000 Stockerau (AT)
(74) Vertreter: Babeluk, Michael
(86) Internationale Anmeldenummer: PCT/AT2011/000408
(87) Internationale Veröffentlichungsnummer: WO 2012/045104

(56) Entgegenhaltungen:
- US-A- 4 090 933
- US-A- 4 235 955
- US-A1- 2007 227 896
- US-A1- 2011 042 229

## Beschreibung

Die Erfindung betrifft eine photoelektrochemische Zelle zur solarbetriebenen Zerlegung eines Ausgangsstoffs, insbesondere Wasser oder Kohlendioxid, in ein darin gebundenes Produktgas, insbesondere Wasserstoff bzw. Kohlenmonoxid, mit einer Zuleitung für den Ausgangsstoff und einer Ableitung für das gewonnene Produktgas, mit einer im Betrieb einer Sonnenstrahlung ausgesetzten ersten Elektrode aus einem photoelektrisch aktivem Material und einer zweiten Elektrode, wobei die Elektroden in einem geschlossenen Stromkreis über einen Elektronenleiter zum Transport von durch die Sonnenstrahlung in der ersten Elektrode angeregten Elektronen und einen Ionenleiter zum Transport von bei der Zerlegung des Ausgangsstoffes entstehenden Ionen miteinander verbunden sind.

Die Erfindung betrifft weiters ein Verfahren zur solarbetriebenen Zerlegung eines Ausgangsstoffs, insbesondere Wasser oder Kohlendioxid, in ein darin gebundenes Produktgas, insbesondere Wasserstoff bzw. Kohlenmonoxid, wobei in einer photoelektrisch aktiven ersten Elektrode mittels Sonnenstrahlung Ladungsträger in Form von Elektron-Loch-Paaren angeregt werden, wobei die angeregten Elektronen zu einer zweiten Elektrode geleitet werden und einer der Elektroden der Ausgangsstoff zugeleitet wird, der mittels der angeregten Ladungsträger zerlegt wird, wobei Ionen erzeugt werden, die in einem geschlossenen Stromkreis zur jeweils anderen Elektrode transportiert werden, wobei das gewonnene Produktgas abgeleitet wird.

Sonnenenergie stellt eine der wichtigsten regenerativen Primärenergiequellen dar, welche den Weltenergiebedarf um ein Vielfaches übersteigt. Die effiziente Nutzung der Sonnenenergie gestaltet sich jedoch schwierig, da die Energiedichte von Sonnenstrahlung im Vergleich zu fossilen Energieträgern gering ist. Ein weiteres Problem stellt die wechselnde Verfügbarkeit der Sonnenenergie dar. Somit besteht eine große Herausforderung darin, die Sonnenenergie möglichst effizient in einen speicherbaren und transportierbaren Sekundärenergieträger umzuwandeln. Es wurden bereits große Anstrengungen unternommen, die Sonnenenergie in chemisch gebundene Energie umzuwandeln. In jüngster Vergangenheit gewinnt als Sekundärenergieträger zunehmend Wasserstoff an Bedeutung. Angesichts der gravierenden Auswirkungen von Treibhausgasen auf das Weltklima wird zudem nach Lösungen gesucht, um Kohlendioxid effizient in Kohlenmonoxid umzuwandeln.

Zur Zerlegung von Wasser in molekularen Wasserstoff (und den als Nebenprodukt auftretenden Sauerstoff) wurden im Stand der Technik photoelektrochemische Zellen (PEC - "Photoelectrochemical Cell") entwickelt. Eine derartige Zelle ist beispielsweise in der US 2008/0131762 A1 beschrieben.

Die photoelektrochemischen Zellen bestehen üblicherweise aus einer Photo-Anode, aus einem halbleitenden Material das zur Generierung von Elektron-Loch-Paaren Sonnenstrahlung ausgesetzt wird, und zumindest einer eine Kathode bildenden Gegenelektrode. Die Elektroden sind in eine elektrolytische Lösung eingetaucht. Zum Schließen des Stromkreises ist zudem eine stromleitende Verbindung zwischen den Elektroden vorgesehen. Der an der Photo-Anode solar erzeugte Strom fließt zur gegenüberliegenden Kathode, um mit H⁺-Ionen zu molekularem Wasserstoff zu reagieren. Diese Technik beruht auf dem inneren Photoeffekt, wobei die kurzwelligen Strahlungsanteile, die im Halbleiter Elektron-Loch-Paare anregen können, in molekularen Wasserstoff - und somit in chemische Energie - umgewandelt werden.

Die Umsetzung der Sonnenenergie in chemische Energie ist bei den bekannten photoelektrochemischen Zellen wenig effizient, da lediglich die kurzwelligen Strahlungsanteile, deren Energie zur Anregung der Elektron-Loch-Paare ausreicht, genutzt werden können. Die langwelligen Strahlungsanteile, deren Photonenenergie geringer als die Bandlücke der halbleitenden Photo-Elektrode ist, stellen eine für die Umwandlung des Ausgangsstoffs nicht nutzbare thermische Energie dar. Bei den bekannten PECs ist der Wärmeeintrag durch die Sonnenstrahlung sogar unerwünscht, da die verwendeten flüssigen Elektrolyte bei höheren Temperaturen chemisch instabil sein können. Ein wesentlicher Nachteil der bekannten photoelektrochemischen Zellen (PEC) besteht nämlich darin, dass an der Photo-Elektrode Photokorrosion auftreten kann, worunter die Zersetzung der im wässrigen Elektrolyt aufgenommenen Photo-Elektrode unter dem Einfluss der Sonnenstrahlung verstanden wird. Beim Auftreten von Photokorrosion wird die photoelektrisch aktive Elektrode oxidiert, wobei Elektrodenmaterial in Lösung geht. Trotz intensiver Forschung ist es bisher nicht zufriedenstellend gelungen, die Stabilität des photoaktiven Elektrodenmaterials im flüssigen Elektrolyt unter Bestrahlung sicherzustellen.

Im Stand der Technik wurde zur Gewinnung von Wasserstoff zudem die Hochtemperatur-Elektrolyse entwickelt, bei welcher Wasserdampf mit Temperaturen von ca. 800 - 1000° Celsius in Wasserstoff und Sauerstoff umgewandelt wird. Dabei wird eine elektrische Spannung an stromleitend verbundene Elektroden angelegt, zwischen denen ein ionenleitendes Festelektrolyt (z.B. Calzium-Yttrium-Zirkonoxid oder ein Perowskit) angeordnet ist. Die Umsetzung des Wasserdampfs bei erhöhter Temperatur weist einen vergleichsweise hohen Wirkungsgrad auf. Die Elektrolyse von Wasser hat jedoch grundsätzlich den Nachteil, dass Strom von einer externen Stromquelle zugeführt werden muss. Dieser Strom kann zwar mit einer Photovoltaikanlage erzeugt werden, welche jedoch analog zu den photoelektrochemischen Zellen lediglich die kurzwelligen Strahlungsanteile zur Stromgewinnung nutzt; die thermische Energie der langwelligen Strahlungsanteile geht jedoch verloren bzw. steht für die Elektrolyse nicht zur Verfügung. Zudem sind Übertragungsverluste unvermeidbar, wenn der photovoltaisch gewonnene Strom zum Hochtemperatur-Elektrolyseapparat geleitet wird.

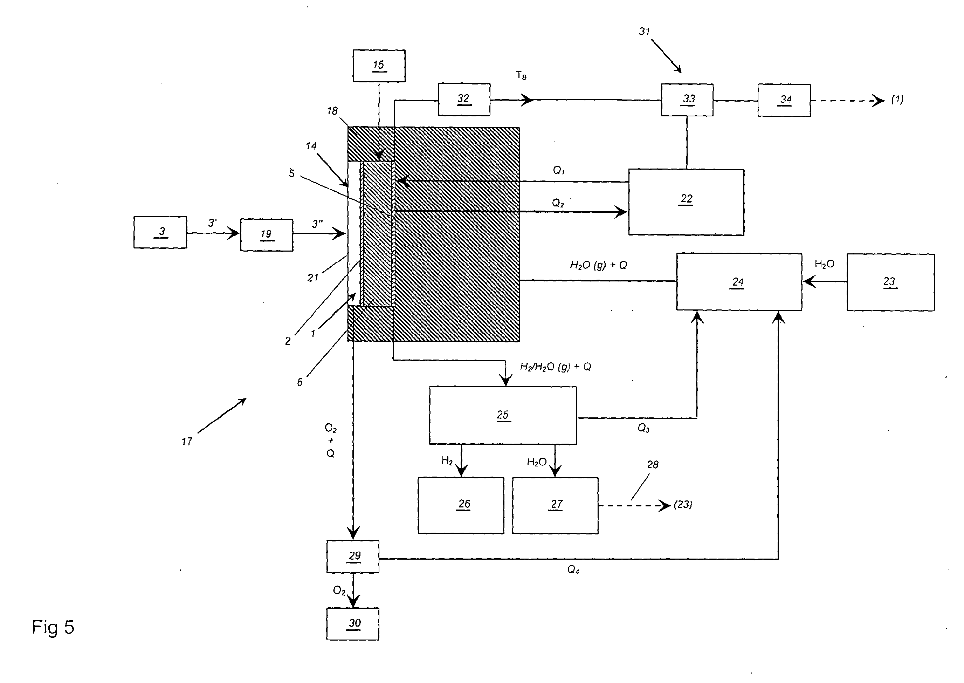

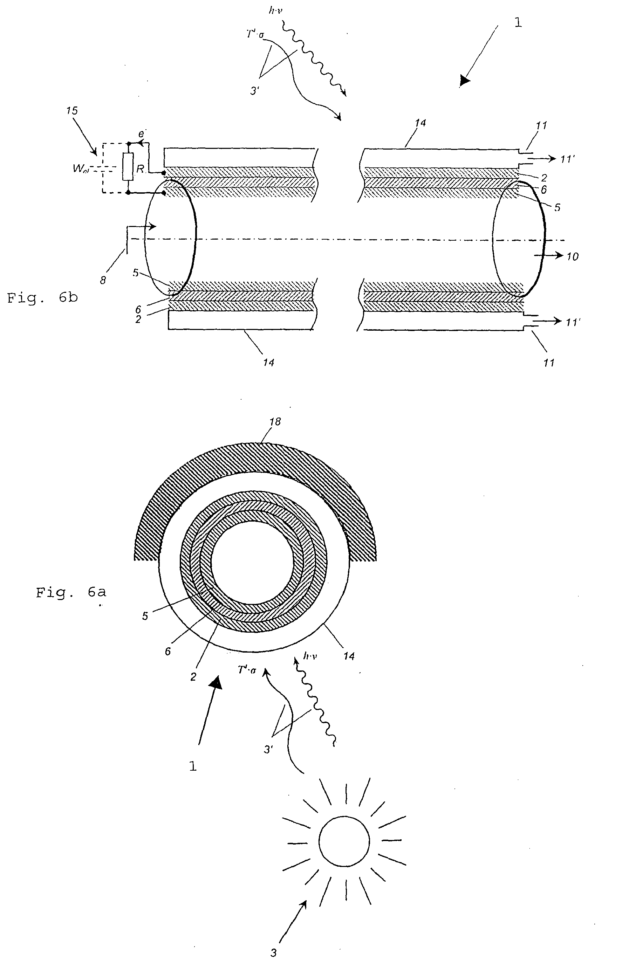

Aus der DE 693 25 817 T2 sind verschiedene Ausführungen einer Vorrichtung zur Herstellung von Wasserstoff mittels Elektrolyse in einer Elektrolysezelle bekannt. Die Vorrichtung weist eine Konzentrationseinrichtung auf, um konzentrierte Sonnenstrahlung auf eine Anordnung von Solarzellen zu fokussieren. Die in den Solarzellen produzierte Elektrizität wird zum Betrieb der Elektrolysezelle genutzt. Zudem kann die thermische Abwärme genutzt werden, indem die langwellige Sonnenstrahlung einem Empfänger zum Erzeugen von thermischer Energie zugeführt wird. Der Empfänger in Form eines Wärmetauschers oder dergl. wird mit einem Zufuhrstrom von Wasser für die Elektrolysezelle verbunden, um Wasserdampf mit einer Temperatur von ungefähr 1000°C zu erzeugen, welcher einen effizienten Betrieb der Elektrolysezelle ermöglicht. Gemäß der Ausführung von Fig. 5, 6 sind sowohl die Elektrolysezelle als auch die Solarzelle im Brennpunkt einer Konzentrationsschüssel angeordnet. Die Elektrolysezelle ist von einem rohrförmigen Hitzeschild bzw. Verteiler umgeben. Die Elektrolysezelle weist ein Rohr aus Yttrium stabilisiertem Zirkonium auf, das innen und außen mit Platinelektroden überzogen ist. Demnach wird die Sonnenstrahlung in Komponenten langer bzw. kurzer Wellenlänge aufgeteilt, welche unabhängig voneinander und räumlich getrennt zur Gewinnung von thermischer Energie für den Betrieb der Elektrolysezelle bzw. zur Erzeugung von Elektrizität in den Solarzellen genutzt werden.

Aus der US 4,170,534 ist eine galvanische Zelle mit Feststoffelektrolyt bekannt. Ähnliche Zellen werden auch in der US 4,090,933A beschrieben.

In der US 4,511,450 ist eine Vorrichtung zur Gewinnung von Wasserstoff beschrieben, bei welcher die langwelligen Anteile der Sonnenstrahlung Wasser erhitzen, um die Zirkulation des Wassers in der Vorrichtung aufrechtzuerhalten; die kurzwelligen Anteile werden zur Wasserspaltung mittels Photoelektrolyse in einer photoaktiven Schicht genutzt.

Demgegenüber besteht die Aufgabe der vorliegenden Erfindung darin, eine Vorrichtung bzw. ein Verfahren der eingangs angeführten Art zu schaffen, welche bzw. welches eine effiziente Nutzung der Sonnenenergie zur Gewinnung von Produktgasen ermöglicht. Zudem sollen die bei bekannten photoelektrochemischen Zellen bzw. den zugehörigen Verfahren auftretenden Nachteile vermieden bzw. reduziert werden.

Diese Aufgabe wird durch eine photoelektrochemische Zelle mit den Merkmalen des kennzeichnenden Teils von Anspruch 1 und ein Verfahren mit den Merkmalen des kennzeichnenden Teils von Anspruch 11 gelöst. Bevorzugte Ausführungen der Erfindungen sind in den abhängigen Ansprüchen angegeben.

Demnach wird zwischen den Elektroden ein hitzebeständiges Feststoff-Material angeordnet, das eine ionenleitende Verbindung zwischen den Elektroden herstellt. Die

Verwendung des hitzebeständigen Feststoff-Elektrolyts erlaubt es, die in der photoelektrochemischen Zelle ablaufenden Prozesse, d.h. zumindest die Anregung der Photo-Elektrode, die Zerlegung des Ausgangsstoffs und den Ionentransport durch den Elektrolyten, bei einer gegenüber Zimmertemperatur wesentlich erhöhten Betriebstemperatur, zweckmäßigerweise mehr als 300° Celsius, durchzuführen. Hierdurch kann eine erhebliche Effizienzsteigerung bei der Gewinnung des Produktgases erzielt werden, wie nachfolgend erläutert wird. Die Sonnenstrahlung weist kurzwellige Strahlungsanteile auf, deren Photonenenergie größer als die Bandlücke zwischen dem Valenzband und dem Leitungsband des halbleitenden Materials der ersten Elektrode ist. Die kurzwellige Strahlung regt in der photoaktiven ersten Elektrode mittels des inneren Photoeffekts Elektron-Loch-Paare an; die in der ersten Elektrode angeregten Elektronen werden über den Stromleiter zur gegenüberliegenden zweiten Elektrode geleitet, um den Ausgangsstoff in das Produktgas zu zerlegen. Die Sonnenstrahlung weist weiters langwellige Strahlungsanteile auf, welche die Bandlücke in der photoaktiven ersten Elektrode nicht überwinden und somit keine Elektronen anregen können. Diese Anteile wirken daher - ebenso wie die über die Bandlücke hinausgehende Energie der kurzwelligen Anteile - als thermische Energie, die bei bekannten photoelektrochemischen Zellen ungenutzt blieb bzw. als unerwünschter Nebeneffekt möglichst vermieden wurde. Demgegenüber wird die thermische Energie bei der erfindungsgemäßen Technik in innere Energie der photoelektrochemischen Zelle umgewandelt, um die Betriebstemperatur zu erhöhen. Der hitzebeständige Feststoff-Elektrolyt hält den erhöhten Betriebstemperaturen durch den Wärmeeintrag durch die langwelligen Strahlungsanteile stand. Zudem wird hierdurch der bei wässrigen Elektrolyten häufig auftretenden Photokorrosion vorgebeugt. Die erhöhte Betriebstemperatur hat zum einen den Vorteil, dass die Bandlücke des halbleitenden Materials der photoaktiven ersten Elektrode verringert wird. Dieser Zusammenhang zwischen Temperatur und Bandlücke ist im Stand der Technik als Modellgleichung von Varshni bekannt. Mit zunehmender Betriebstemperatur wird das zur Anregung von Elektronen in der photoelektrisch aktiven ersten Elektrode nutzbare Spektrum der Sonnenstrahlung zum langwelligen Bereich hin erweitert, so dass die in der photoaktiven ersten Elektrode erzeugte Ladungsträgerdichte wesentlich erhöht wird. Somit kann der zur gegenüberliegenden zweiten Elektrode geleitete Strom erhöht werden, um den Umsatz des Ausgangsstoffes zu verbessern. Eine erhöhte Betriebstemperatur, welche durch den Einsatz hitzebeständiger Feststoff-Materialien für den Elektrolyt erst ermöglicht wird, hat weiters den Vorteil, dass die thermodynamische Zersetzungsspannung (auch chemisches Potential oder Gibbs-Energie) des Ausgangsstoffes reduziert wird, worunter die mindestens benötigte Differenz zwischen den der Elektrodenpotentialen verstanden wird. Für die Wasserzerlegung beträgt das Standard-Spannungspotential bei Raumtemperatur (298,15 Kelvin) und einem Umgebungsdruck von 1 bar ca. 1,23 V, was in diesem Fall einem chemischen Potential bzw. einer Gibbs-Energie von 1,23 eV entspricht. Bei einer Erhöhung der Betriebstemperatur auf vorzugsweise 500° bis 900° Celsius (773 - 1.175 Kelvin) sinkt das Spannungspotential von Wasser auf 0,9-1 V ab. Die photoelektrochemische Zelle ist dazu eingerichtet, die Betriebstemperatur durch die thermische Energie der Sonneneinstrahlung auf einem hohen Niveau zu konservieren, um die Vorteile einer niedrigeren Zersetzungsspannung für den Ausgangsstoff und die erhöhte Elektronendichte in der photoaktiven ersten Elektrode zu nutzen. Somit kann eine besonders effiziente Umsetzung der Sonnenenergie erreicht werden, indem die nicht an der Anregung von Elektron-Loch-Paaren beteiligten Strahlungsanteile zur Erhitzung der photoelektrochemischen Zelle genutzt werden. Andererseits wird durch die Verwendung des Feststoff-Elektrolyten einer Photokorrosion der photoelektrisch aktiven ersten Elektrode infolge der Sonneneinstrahlung auch bei erhöhter Betriebstemperatur zuverlässig vorgebeugt. Somit wird eine Elektrolyse-Technik geschaffen, welche den zur Zerlegung des Ausgangsstoffes erforderlichen Strom aus der solaren Anregung der photoaktiven ersten Elektrode bezieht, wobei im Hinblick auf erhöhte Betriebstemperaturen als Ionenleiter ein Feststoff-Elektrolyt vorgesehen ist. Hierdurch kann der Wirkungsgrad gegenüber bekannten photoelektrochemischen Zellen, welche lediglich eine schmale Bandbreite des Strahlungsspektrums nützen können, erheblich erhöht werden. Andererseits wird eine Effizienzsteigerung gegenüber Elektrolyse-Apparaten mit externer Stromversorgung zur Aufrechterhaltung der Potentialdifferenz zwischen den Elektroden erreicht. Somit wird eine photoelektrisch-thermochemische Zelle bzw. ein zugehöriges photoelektrisch-thermochemisches Verfahren geschaffen, welches die von herkömmlichen photoelektrochemischen Zellen bekannte photoelektrische Ladungsträger-Generierung mit einer thermisch unterstützten chemischen Zerlegung des Ausgangsstoffes - welche durch die Verwendung des hitzebeständigen Feststoff-Elektrolyten ermöglicht wird - kombiniert.

Um die thermische Stabilität der photoelektrochemischen Zelle in einem weiten Temperaturbereich, insbesondere für Betriebstemperaturen von mehr als 300° Celsius, zu gewährleisten, ist es günstig, wenn der Elektrolyt aus einem Feststoffoxid-Material, insbesondere Zirconiumdioxid (ZrO₂) oder einem Lanthan-Mischoxid, vorzugsweise Lanthanzirkonat (LaZrO₃) oder Lanthancerat (LaCeO₃), besteht. Diese Materialien ermöglichen es, die photoelektrochemische Zelle bei Betriebstemperaturen von zumindest mehr als 300° Celsius zu betreiben, um eine signifikante Verringerung des chemischen Potentials bei der Zerlegung des Ausgangsstoffes und eine gesteigerte Elektronenausbeute im photoaktiven Material der ersten Elektrode zu nutzen. Das verwendete Feststoffoxid-Material für den Ionenleiter hängt von der Art der transportierten Ionen ab; zum Transport von O²⁻-Ionen ist als Feststoff-Elektrolyt zweckmäßigerweise ZrO₂ vorgesehen, das einen Betrieb der photoelektrochemischen Zelle bei Betriebstemperaturen von vorzugsweise 700-1000° Celsius ermöglicht. Für einen Transport von H⁺-Ionen ist bevorzugt ein Elektrolyt aus einem Lanthan-Mischoxid, insbesondere Lanthancirkonat oder Lanthancerat, vorgesehen, welches den Einsatz der Zelle in einem bevorzugten Temperaturbereich von 300-700° Celsius erlaubt. Wenn die photoelektrochemische Zelle zur Reduktion von Kohlendioxid verwendet wird, ist ausschließlich O²⁻-Ionenleitung möglich, welche mit dem entsprechenden Feststoffoxid-Material ermöglicht wird; bei der Wasserzerlegung können je nach Ausführung H⁺ -Ionen oder O²⁻-Ionen transportiert werden, wofür wahlweise ein H⁺-Ionen oder ein O²⁻-Ionen leitendes Feststoffoxid-Material vorgesehen ist.

Zur Verbesserung der ionenleitenden Eigenschaften des Feststoffoxid-Materials ist es von Vorteil, wenn das Feststoffoxid-Material mit einem Seltenerdmetall, insbesondere mit Yttrium, dotiert ist.

Zur Erzielung einer thermisch stabilen Photo-Elektrode mit hoher Elektronenausbeute unter Sonnenbestrahlung ist es günstig, wenn als photoelektrisch aktives Material der ersten Elektrode ein Mischmetalloxid, vorzugsweise mit Perowskit-Struktur, insbesondere Strontiumtitanat (SrTiO₃) oder Kalium-Tantalat (KTaO₃), vorgesehen ist. Die Perowskit-Struktur ist durch die Summenformel ABO₃ charakterisierbar. Im perfekten Gitter sitzt hierbei an der Stelle A ein zweiwertiges Kation, z.B. Sr²⁺. Der Stelle B ist ein Kation mit einer vierwertigen positiven Ladung, z.B. Ti⁴⁺, zugeordnet, damit insgesamt die Neutralitätsbedingung erfüllt ist.

Zur Ausbildung der ersten Elektrode als p-Halbleiter ist es von Vorteil, wenn das Perowskit-Mischmetalloxid der ersten Elektrode mit einer Akzeptorsubstanz, insbesondere Eisen, dotiert ist. Als Akzeptorsubstanz wird ein vorzugsweise dreiwertiges Kation, insbesondere Fe³⁺, durch Dotierung an Stelle B des Perowskit-Gitters eingesetzt, so dass eine positive Relativladung entsteht. Je zwei dreiwertige Kationen (z.B. Fe³⁺) ist die Relativladung, bezogen auf die Idealladung an der Stelle B des Perowskit-Gitters, zweifach positiv. Hierdurch wird eine O²⁻-Leitung durch das photoaktive Material der ersten Elektrode ermöglicht; zudem kann ein Einbau von O₂-Molekülen, z.B. als Bestandteil von H₂O, erreicht werden. Die Dotierung des Elektrodenmaterials hat zudem den Vorteil, dass die Bandlücke der photoelektrisch aktiven Elektrode gesenkt werden kann, wodurch der Anteil des nutzbaren Sonnenlichtspektrum entsprechend vergrößert wird. Im Fall von Fe-dotiertem Strontiumtitanat (SrTi₁₋ₓFeₓO₃) kann die Bandlücke von ca. 3,2 eV (ohne Fe-Dotierung, x=0) durch Fe-Dotierung mit x=0,5 auf ca. 2,4 eV gesenkt werden. Hierbei beträgt der Fe-Anteil im Kristall vorzugsweise nicht mehr als 50% (x=0,5), da andernfalls Mischphasen entstehen könnten, welche die Stabilität der Kristallstruktur von SrTi₁₋ₓFeₓO₃ beeinträchtigen würden. In den durchgeführten Untersuchen haben sich für die Materialsynthese des Perowskit-Mischmetalloxis Fe-Dotierungen zwischen x=0,3 und x=0,5 als zweckmäßig herausgestellt.

Alternativ kann die erste Elektrode aus einem Übergangsmetalloxid (MeOₓ), vorzugsweise Fe₂O₃, CoO, Cu₂O, NiO, SnO₂, TiO₂, WO₃ oder ZnO, gefertigt sein.

Zur effizienten Zerlegung des Ausgangsstoffes ist es günstig, wenn die zweite Elektrode aus einem katalytisch wirksamen Material, insbesondere RuO₂, LaSrMnO₃, Pt, einer Metall-Keramik-Mischung, vorzugsweise Ni-YSZ, oder Ni gefertigt ist.

Die photoelektrisch aktive erste Elektrode ist hierbei vorzugsweise als Kathode und die zweite Elektrode als Anode ausgebildet; je nach Ausführung der photoelektrochemischen Zelle kann alternativ eine vertauschte Anordnung von Kathode bzw. Anode vorgesehen sein.

Herkömmliche Elektrolyse-Apparaturen benötigen zwingend eine externe Stromversorgung, um eine Potentialdifferenz zwischen den Elektroden zu generieren. Demgegenüber werden die Ladungsträger bei der erfindungsgemäßen Vorrichtung durch Bestrahlung der photoaktiven ersten Elektrode angeregt. Um die Elektron-Loch-Rekombination in der ersten Elektrode zu verringern, kann es allerdings günstig sein, wenn der Elektronenleiter eine Spannungs- bzw. Stromquelle zur Unterstützung des Transports der durch die Sonnenstrahlung angeregten Elektronen aufweist.

Bei der Anregung der photoaktiven ersten Elektrode werden Elektron-Loch-Paare erzeugt. Die Ladungsträger können mit den bei der Umsetzung des Ausgangsstoffes erzeugten Ionen zu einem Nebenprodukt rekombinieren. Zweckmäßigerweise ist daher vorgesehen, dass eine der Elektroden mit einer Abführung für ein durch die Zerlegung des Ausgangsstoffes entstehendes gasförmiges Nebenprodukt, insbesondere Sauerstoff, verbunden ist.

Zur Verbesserung des Ionentransports ist es von Vorteil, wenn zwischen einer der Elektroden und dem Elektrolyt eine Katalysator- bzw. Elektronenleitschicht, insbesondere aus Ag, Au, Pt, RuO₂, Ni, Ni-YSZ, LaSrMnO₃ oder oder LaSrCoO₃ angeordnet ist. YSZ steht hier als Abkürzung für "Yttria-stabilized zirconia", worunter ein Keramikmaterial auf Basis von Zirkonium-Oxid verstanden wird. Das Material für die Katalysator- bzw. Elektronenleitschicht kann je nach Art der transportierten Ionen, d.h. insbesondere O²⁻ bzw. H⁺-Ionen, derart gewählt werden, dass die gewünschte katalytische Wirkung erzielt wird. Zudem kann der Elektronentransport verbessert werden.

Um die Elektronenausbeute bei der Anregung der photoaktiven ersten Elektrode zu erhöhen, ist es günstig, wenn der ersten Elektrode eine Einrichtung zur Bündelung der einfallenden Sonnenstrahlung zugeordnet ist, welche dazu eingerichtet ist, die Intensität einer auf die erste Elektrode gebündelten Strahlung um zumindest das 30-fache, vorzugsweise um zumindest das 50-fache, gegenüber der einfallenden Sonnenstrahlung zu erhöhen. Die konzentrierte Sonnenstrahlung ermöglicht es, den Wärmeeintrag in die photoelektrochemische Zelle zu erhöhen, um die Betriebstemperatur auf einem gegenüber Zimmertemperatur wesentlich erhöhten Niveau, insbesondere mehr als 300° Celsius, zu halten. Somit kann die thermische Energie der Sonnenstrahlung - die bei herkömmlichen Zellen dieser Art vernachlässigt wurde - gezielt ausgenutzt werden. Die Einrichtung zur Bündelung der einfallenden Sonnenstrahlen ist insbesondere dazu eingerichtet, die erhöhte Betriebstemperatur der photoelektrochemischen Zelle selbsttätig aufrechtzuerhalten. Zudem kann durch die fokussierte Sonnenstrahlung die Ladungsdichte im photoaktiven Material der ersten Elektrode erheblich erhöht werden. Bevorzugt ist eine flächen-fokussierende Einrichtung zur Bündelung der Sonnenstrahlung vorgesehen, wozu beispielsweise Solarturm-Kraftwerke zählen, welche einen Heliostaten und einen Receiver aufweisen. Alternativ kann eine linien-fokussierende Einrichtung angeordnet sein, zweckmäßigerweise eine Parabolrinnen-Kollektoranlage oder eine Fresnel-Kollektoranlage.

Bei einer bevorzugten Ausführungsform der Erfindung ist vorgesehen, dass die Elektroden und der Elektrolyt zur Erzielung eines Paneels in einem flachen Gehäuse aufgenommen sind, das ein die erste Elektrode abdeckendes lichtdurchlässiges Eintrittsfenster, insbesondere eine Glasscheibe, aufweist. Die photoelektrisch aktive erste Elektrode ist vorzugsweise als großflächige Platte ausgeführt, die in Richtung der einfallenden Sonnenstrahlung orientierbar ist. Das Paneel stellt - ähnlich einer Photovoltaikanlage - eine mechanisch stabile, kompakte Anordnung dar, die einfach und rasch aufgebaut werden kann. Bei einer alternativen bevorzugten Ausführung der Erfindung ist vorgesehen, dass zumindest die der Sonnenstrahlung zugewandte photoaktive erste Elektrode gekrümmt ist. Vorzugsweise weist die photoelektrochemische Zelle eine im Wesentlichen zylindrische Gestalt auf, wobei das Eintrittsfenster, die erste Elektrode, der Elektrolyt und die zweite Elektrode durch entsprechende hohlzylindrische Schichten gebildet sind.

Zur Aufrechterhaltung einer erhöhten Betriebstemperatur ist es günstig, wenn das Gehäuse von einem Isolierkörper ummantelt ist, der eine dem Eintrittsfenster entsprechende Ausnehmung aufweist. Somit kann die thermische Energie der Sonnenstrahlung in der Zelle mit hohem Wirkungsgrad in innere Energie umgewandelt werden, um die Betriebstemperatur der Zelle zu erhöhen.

Mit dem erfindungsgemäßen Verfahren werden dieselben Vorteile wie mit der erfindungsgemäßen Vorrichtung erzielt, so dass zwecks Vermeidung von Wiederholungen auf vorstehende Ausführungen verwiesen werden kann.

Die Anregung der ersten Elektrode, der Ionentransport zwischen den Elektroden und die Zerlegung des Ausgangsstoffes erfolgt bevorzugt bei einer Betriebstemperatur von mehr als 300° Celsius, vorzugsweise mehr als 500° Celsius. Diese Betriebstemperaturen ermöglichen es einerseits, die Bandlücke des halbleitenden Materials der photoaktiven ersten Elektrode erheblich abzusenken, so dass die zu Anregung von Elektron-Loch-Paaren nutzbaren Strahlungsanteile der Sonnenstrahlung in Richtung langwelliger Strahlung erweitert werden. Zudem wird das chemische Potential für die Zerlegung des Ausgangsstoffes erniedrigt, so dass eine effizientere Umwandlung des Ausgangsstoffes in das Produktgas ermöglicht wird.

Wenn die erste Elektrode mit konzentrierter Sonnenstrahlung bestrahlt wird, deren Intensität um zumindest das 30-fache, vorzugsweise um zumindest das 50-fache, gegenüber der Intensität der einfallenden Sonnenstrahlung erhöht ist, werden in der ersten Elektrode vermehrt Elektronen in das Leitungsband gehoben, die über den Elektronenleiter zur zweiten Elektrode geleitet werden, um den Ausgangsstoff in das Produktgas sowie die entsprechenden Ionen zu zerlegen. Die Fokussierung der Sonnenstrahlung hat zudem den Vorteil, dass die Betriebstemperatur in dem gewünschten Bereich gehalten werden kann.

Bei einer bevorzugten Ausführung ist vorgesehen, dass die Betriebstemperatur in einem Aufheizvorgang mittels einer externen Wärmequelle, insbesondere einer Solaranlage, erreicht wird. Demnach wird die photoelektrochemische Zelle zunächst auf Betriebstemperatur vorgeheizt; anschließend wird die externe Wärmequelle vorzugsweise von der Zelle abgekoppelt. Der zur Aufrechterhaltung der Betriebstemperatur erforderliche Wärmeeintrag erfolgt im Betrieb insbesondere durch konzentrierte Sonnenstrahlung.

Eine erste bevorzugte Ausführungsvariante der Erfindung sieht vor, dass zur Wasserzerlegung als Ausgangsstoff überhitzter Wasserdampf mit einer Temperatur von zumindest 300°, vorzugsweise mehr als 500°, zugeleitet wird. Bei den angegebenen Betriebstemperaturen ist das chemische Potential für die Zerlegung des Wasserdampfs wesentlich geringer als bei Raumtemperaturen, wenn Wasser im flüssigem Aggregatszustand vorliegt.

Eine weitere bevorzugte Ausführungsvariante sieht vor, dass zur Kohlendioxidzerlegung als Ausgangsstoff Kohlendioxid mit einer Temperatur von zumindest 600°, vorzugsweise mehr als 700°, zugeleitet wird. Demnach wird an der zweiten Elektrode, d.h. der Kathode, das Kohlendioxid zu Kohlenmonoxid reduziert.

Gemäß einer weiteren bevorzugten Ausführungsform ist der Ausgangsstoff ein Gasgemisch, insbesondere Luft, von welchem ein Gasanteil, insbesondere Sauerstoff, als Produktgas abgetrennt wird. Der Gasanteil wird hierbei an der mit der Gasgemisch-Zuführung verbundenen Elektrode mittels der angeregten Ladungsträger in die zugehörigen Ionen umgesetzt, welche durch das Elektrolyt zur jeweils gegenüberliegenden Elektrode geleitet werden, um dort zum molekularen Produktgas zu reagieren. Dieses Prinzip kann vorteilhafterweise zur Bereitstellung einer photonenbetriebenen Sauerstoff-Pumpe genutzt werden.

Zur optimalen Ausnutzung der Sonnenenergie ist es von Vorteil, wenn die Wärmeenergie des an der zweiten Elektrode gewonnenen Produktgases bzw. eines an der ersten Elektrode entstehenden gasförmigen Nebenprodukts in einem Wärmeenergie-Rückgewinnungskreislauf zur Erhitzung des Ausgangsstoffs herangezogen wird. Demnach geht die Wärmeenergie des Produktgases bzw. etwaiger Nebenprodukte nicht verloren, sondern wird rückgewonnen, um den Ausgangsstoff hinsichtlich der gewünschten Betriebstemperatur zu erhitzen. Die Rückgewinnung der Wärmeenergie erfolgt bevorzugt mittels Wärmetauschern, die im Stand der Technik in vielfältigen Ausführungen bekannt sind.

Um die Betriebstemperatur auch bei wechselnden Bedingungen möglichst konstant zu halten, ist es günstig, wenn die Betriebstemperatur gemessen und auf einen festgelegten Wert geregelt wird. Demnach wird beispielsweise an der zweiten Elektrode ein Messelement angeordnet, das die momentane Betriebstemperatur misst und als Eingangsgröße an einen Regelkreis übermittelt, welcher die Betriebstemperatur auf den festgelegten Wert regelt. Zu diesem Zweck kann der Regelkreis mit einer Nachführung für die photoelektrochemische Zelle gekoppelt sein, welche den Neigungswinkel der ersten Elektrode zur einfallenden Sonnenstrahlung beeinflussen kann. Zudem kann der Regelkreis mit der externen Wärmequelle gekoppelt sein, um bei Bedarf einen zusätzlichen Wärmeeintrag in die photoelektrochemische Zelle vorzusehen.

Die Erfindung wird nachstehend anhand von in den Zeichnungen dargestellten Ausführungsbeispielen, auf die sie jedoch nicht beschränkt sein soll, noch weiter erläutert.

Im Einzelnen zeigen in den Zeichnungen:
- Fig. 1: eine schematische Ansicht einer photoelektrochemischen Zelle, welche gemäß einer ersten Ausführungsform der Erfindung in der Art eines Paneels ausgebildet ist, wobei zwei plattenförmige Elektroden vorgesehen sind, zwischen denen ein ionen leitendes Elektrolyt aus einem hitzebeständigen Feststoff-Material angeordnet ist;
- Fig. 2a: schematisch das Funktionsprinzip einer phototelektrochemische Zelle zur Wasserstoff-Gewinnung, welche gemäß einer ersten Ausführungsvariante ein O²⁻-Ionen leitendes Festoxid-Elektrolyt aufweist;
- Fig. 2b: das Funktionsprinzip der phototelektrochemischen Zelle gemäß Fig. 2a, wobei die photoelektrisch aktive Elektrode als Kathode ausgebildet ist;
- Fig. 2c: ein Diagramm mit der Strom-Spannungskennlinie der in Fig. 2b dargestellten photoelektrochemischen Zelle;
- Fig. 3: schematisch das Funktionsprinzip einer photoelektrochemischen Zelle zur Wasserstoff-Gewinnung, wobei gemäß einer zweiten Ausführungsvariante ein H⁺-Ionen leitendes Festoxid-Elektrolyt vorgesehen ist;
- Fig. 4: schematisch das Funktionsprinzip einer photoelektrochemischen Zelle zur Reduktion von Kohlendioxid in Kohlenmonoxid;
- Fig. 5: ein Blockschaltbild einer Anlage zur Wasserstoff-Produktion mit einer photoelektrochemischen Zelle gemäß Fig. 2;
- Fig. 6a: eine Querschnittsansicht einer photoelektrochemischen Zelle, welche gemäß einer weiteren Ausführungsform der Erfindung zylindrisch ausgebildet ist;
- Fig. 6b: einen Längsschnitt der in Fig. 6a dargestellten photoekelektrochemischen Zelle; und
- Fig. 7: schematisch das Funktionsprinzip einer gemäß einer weiteren Ausführungsform der Erfindung ausgebildeten photoelektrochemischen Zelle, welche zur Abtrennung eines Gasanteils aus einem Gasgemisch eingerichtet ist.

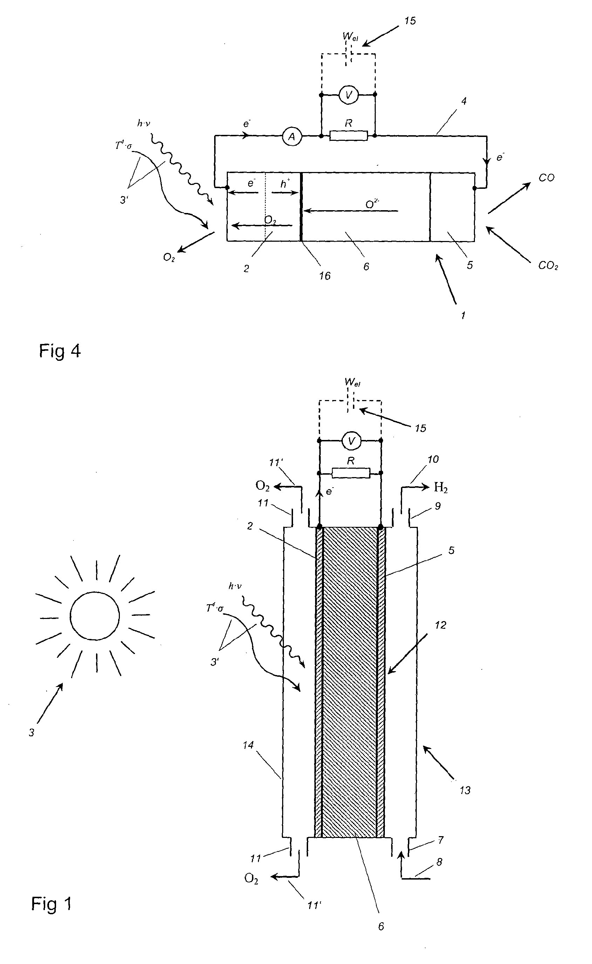

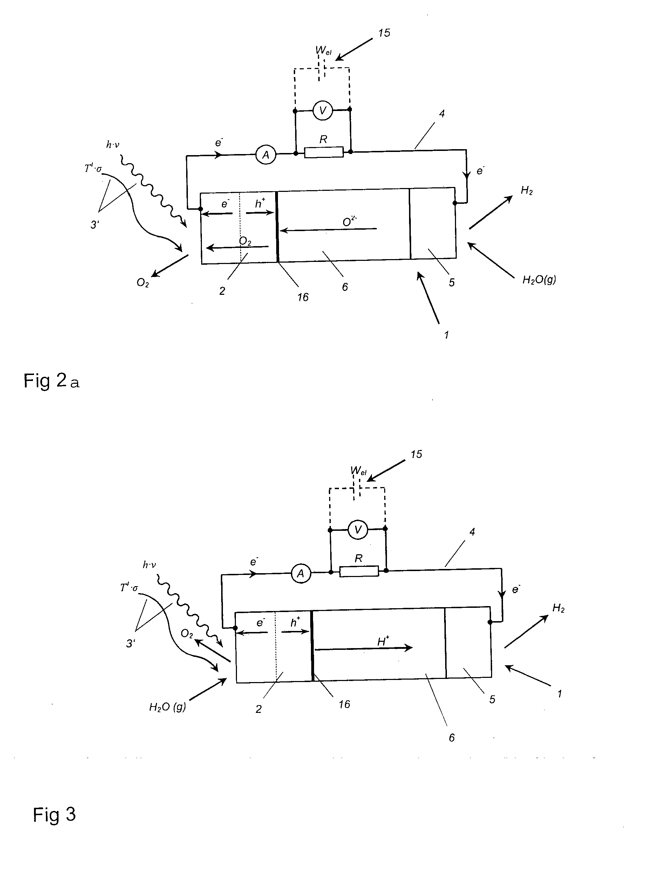

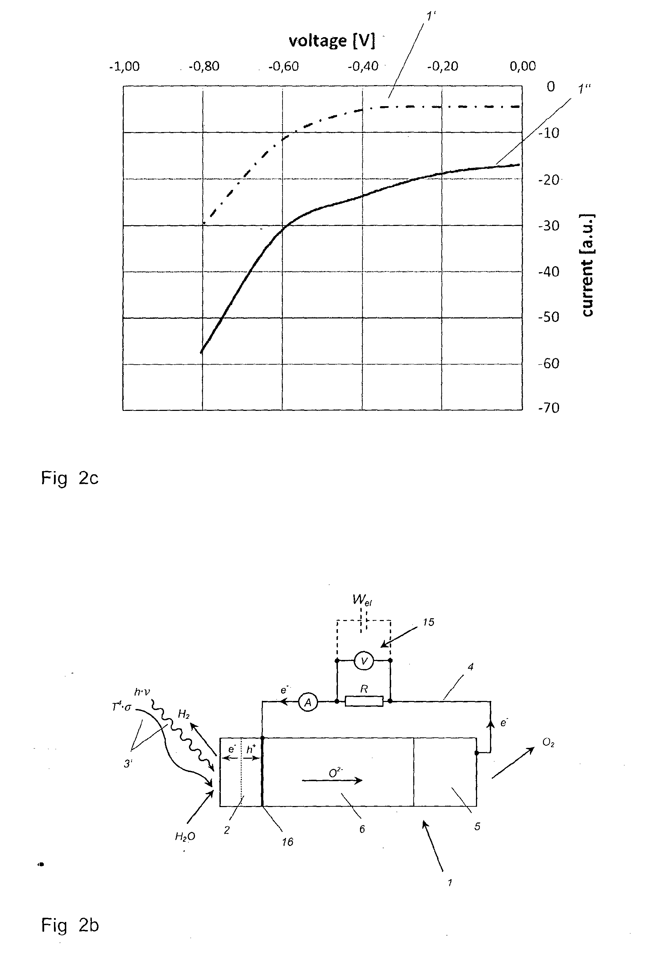

Fig. 1 zeigt schematisch eine photoelektrochemische Zelle 1 zur solarbetriebenen Zerlegung eines Ausgangsstoffs in ein darin gebundenes Produktgas. Das gewonnene Produktgas ist insbesondere ein gasförmiger Energieträger wie (molekularer) Wasserstoff oder Kohlenmonoxid. Die Zelle 1 weist eine photoelektrisch aktive erste Elektrode 2 auf, die im Betrieb der Sonnenstrahlung 3' der (in Fig. 1 schematisch eingezeichneten) Sonne 3 ausgesetzt wird. Die Sonnenstrahlung 3' regt in der ersten Elektrode 2, welche aus einem halbleitenden Material besteht, Elektron-Loch-Paare an; unter Sonnenbestrahlung wird somit die Ladungsträgerdichte in der ersten Elektrode 2 erhöht. Die Anregung der ersten Elektrode 2 beruht auf dem inneren photoelektrischen Effekt, worunter die Erhöhung der Leitfähigkeit des Elektrodenmaterials durch Anregung von Elektronen aus dem Valenzband in das Leitungsband verstanden wird. Dazu muss die Energie der Anregungsstrahlung größer als die Bandlücke des halbleitenden Materials der ersten Elektrode 2 sein. Die angeregten Elektronen werden über einen Elektronenleiter 4 zu einer zweiten Elektrode 5 geleitet. Zum Schließen des Stromkreises ist ein Ionenleiter 6 vorgesehen, welcher zum Transport von Ionen zwischen der ersten Elektrode 2 und der zweiten Elektrode 5 eingerichtet ist. Bei der in Fig. 1 gezeigten Ausführung ist die zweite Elektrode 5 mit einer Zuleitung 7 verbunden, über die der Ausgangsstoff in Pfeilrichtung 8 zugeführt wird. Der Ausgangsstoff wird mittels der Ladungsträger, die in der ersten Elektrode 2 in Form von Elektron-Loch-Paaren vorliegen, zerlegt, wobei das gewonnene Produktgas die photoelektrochemische Zelle 1 über eine Ableitung 9 in Pfeilrichtung 10 verlässt. Bei der Zerlegung des Ausgangsstoffes entstehen Ionen, welche zwischen den Elektroden 2, 5 über den Ionenleiter 6 transportiert werden. Im Bereich der ersten Elektrode 2 sind weiters schematisch Abführungen 11 für ein Nebenprodukt dargestellt, das die photoelektrochemische Zelle 1 in Pfeilrichtung 11' verlässt. Die Anordnung der Zuleitung 7 bzw. der Ableitung 9 hängt von den stattfindenden Reaktionen ab und kann von der in Fig. 1 gezeigten Ausführung verschieden sein, wie aus Fig. 3 ersichtlich ist. Die in der photoelektrochmischen Zelle 1 ablaufenden Reaktionen werden nachstehend im Zusammenhang mit bevorzugten Ausführungen näher erläutert; die Wasserzerlegung in molekularen Wasserstoff wird anhand von Fig. 2 und 3 und die Reduktion von Kohlendioxid in Kohlenmonoxid anhand von Fig. 4 beschrieben.

Bekannte Zellen dieser Art weisen zum Ionentransport eine Elektrolytlösung auf, welche die Elektroden umspült. Die Elektrolytlösung hat jedoch den Nachteil, dass an der bestrahlten Elektrode Photokorrosion auftreten kann, wobei Elektrodenmaterial in Lösung geht. Dies kann zu irreparablen Schäden der Zelle führen. Zudem wird bei den bekannten Zellen nachteiligerweise lediglich eine schmale Bandbreite der Sonnenstrahlung genutzt, nämlich diejenigen kurzwelligen Strahlungsanteile, deren Photonenenergie (in Fig. 1 mit "hv" veranschaulicht) größer als die Bandlücke des halbleitenden Materials der Photo-Elektrode ist. Die Eigenschaften der Sonnenstrahlung 3' als thermische Strahlung, welche gemäß dem (in Fig. 1 mit "T⁴σ" veranschaulichten) Stefan Boltzmann-Strahlungsgesetz einen Wärmeeintrag in die Zelle 1 bewirken, wurden jedoch als unerwünschter Nebeneffekt vernachlässigt.

Demgegenüber ist bei der in den Zeichnungen dargestellten photoelektrochemischen Zelle 1 vorgesehen, dass als Ionenleiter 6 ein zwischen den Elektroden 2, 5 angeordnetes Elektrolyt aus einem hitzebeständigen Feststoff-Material vorgesehen ist. Als Feststoff-Elektrolyt ist insbesondere ein Feststoffoxid-Material vorgesehen, das in einem weiten Temperaturbereich thermisch stabil ist. Hierdurch kann einerseits der bei flüssigen Elektrolyt-Lösungen vielfach auftretenden Photokorrosion der Elektrode 2 vorgebeugt werden. Zudem kann der Wirkungsgrad der photoelektrochemischen Zelle 1 erhöht werden, da im Wesentlichen das gesamte Spektrum der Sonnenstrahlung 3' unmittelbar bzw. mittelbar zur Zerlegung des Ausgangsstoffes beiträgt. Wie bei herkömmlichen photoelektrochemischen Zellen 1 werden mit den kurzwelligen Strahlungsanteilen im photoaktiven Material der ersten Elektrode 2 Photo-Elektronen angeregt. Die Strahlungsanteile mit einer geringeren Photoenenergie als die Bandlücke des halbleitenden Materials der ersten Elektrode 2 bewirken einen Wärmeeintrag in die photoelektrochemische Zelle 1. Dies gilt entsprechend für die Überschussenergie der kurzwelligen Strahlungsanteile, d.h. die Energiedifferenz zwischen dem höherenergetischen Rand der Bandlücke und der Photonenenergie. Der Wärmeeintrag durch die Sonnenstrahlung 3' wird in innere Energie der photoelektrochemischen Zelle 1 umgewandelt, um die Betriebstemperatur der photoelektrochemischen Zelle 1 gegenüber Raumtemperatur zu erhöhen, was bei den bekannten Zellen vermieden wurde bzw. unerwünscht war. Aufgrund der Verwendung von hitzebeständigen Materialien, insbesondere des Feststoff-Elektrolyten für den Ionenleiter 6, kann die photoelektrochemische Zelle 1 der erhöhten Betriebstemperatur standhalten. Die Erhöhung der Betriebstemperatur hat zum einen den positiven Effekt, dass die für die Zerlegung des Ausgangsstoffes in das Produktgas erforderliche Zersetzungsspannung absinkt. Zudem weisen die verwendeten halbleitenden Materialien für die photoaktive erste Elektrode 2 eine temperaturabhängige Bandlücke auf, welche bei einer Temperaturerhöhung reduziert wird. Somit kann die Elektronenausbeute in der photoaktiven ersten Elektrode 2 gesteigert werden, so dass ein größerer Strom zur zweiten Elektrode 5 geleitet wird, welcher den Umsatz des Ausgangsstoffes in das Produktgas erhöht. Aufgrund der Ausnutzung der thermischen Strahlungseigenschaften ist die erfindungsgemäße Zelle 1 somit als photoelektrisch-thermochemische Zelle ausgebildet, für welche die Abkürzung PETC ("Photoelectrical-Thermochemical Cell") vorgeschlagen wird.

Wie aus Fig. 1 weiters ersichtlich, ist die photoelektrochemische Zelle 1 als flaches Paneel 12 ausgebildet, das in ein Gehäuse 13 eingebettet ist. Die Elektroden 2, 5 bilden gemeinsam mit dem dazwischen angeordneten Feststoff-Elektrolyt einen Dünnschichtaufbau, wobei die Elektroden 2, 5 und der Feststoff-Elektrolyt als großflächige Platten ausgeführt sind. Somit wird eine planare Anordnung der photoelektrochemischen Zelle 1 vorgesehen. An der der Sonnenstrahlung 3' zugewandten Seite weist das Gehäuse 13 ein Eintrittsfenster 14 auf, das für die auftreffende Sonnenstrahlung durchlässig ist. Zu diesem Zweck kann das Eintrittsfenster 14 aus Quarzglas gefertigt sein. Somit wird eine kompakte photoelektrochemische Zelle 1 realisiert, die in der Art eines Solarpaneels zum Einsatz kommen kann.

Wie in Fig. 1 weiters schematisch eingezeichnet, kann der Elektronenleiter 4 optional eine (in Fig. 1 mit Wₑₗ bezeichnete) Spannungs- bzw. Stromquelle 15 aufweisen, welche den Transport der in der ersten Elektrode 2 durch die Sonnenstrahlung 3' angeregten Elektronen zur zweiten Elektrode 5 unterstützt. Im Unterschied zu bekannten, andersartigen Elektrolyse-Apparaturen ist eine derartige externe Spannungs- bzw. Stromquelle 15 jedoch nicht zwingend vorgesehen, da der überwiegende Anteil des Stroms in der photoelektrochemischen Zelle 1 selbst solar erzeugt wird. Der Elektronenleiter 4 weist einen in der Zeichnung schematisch mit "R" bezeichneten Widerstand auf; die Potentialdifferenz zwischen den Elektroden 2, 5 ist mit "V" bezeichnet.

Fig. 2a bzw. Fig. 2b und Fig. 3 zeigen jeweils schematisch die Anwendung der in Fig. 1 gezeigten photoelektrochemischen Zelle 1 für die Zerlegung von Wasser in molekularen Wasserstoff und Sauerstoff.

Wasserstoff wurde bisher vornehmlich in der chemischen und in der metallurgischen Industrie eingesetzt. Der Wasserstoff dient dabei zur Herstellung von Zwischenverbindungen wie Ammoniak und Methanol oder als chemisches Reduktionsmittel. Eine weitere Anwendung liegt in der Mineralölverarbeitung und in der Herstellung synthetischer Kraft- und Schmierstoffe. Derzeit wird Wasserstoff überwiegend aus fossilen Energieträgern erzeugt. Es ist davon auszugehen, dass der Bedarf an Wasserstoff ansteigen wird. Zum einen ist eine gesteigerte Nachfrage der chemischen Industrie, beispielsweise für die Düngemittel-Produktion, zu erwarten. Zudem gewinnt Wasserstoff zunehmend als Brennstoff für die Strom- und Wärmeerzeugung mittels Brennstoffzellen an Bedeutung. Wasserstoff kann somit dazu beitragen, den Einsatz fossiler Kraftstoffe zu reduzieren. Die Produktion von Wasserstoff als Brenn- und Kraftstoff ist jedoch energetisch und ökologisch nur dann sinnvoll, wenn hierfür überwiegend regenerative Energien eingesetzt werden können.

Somit besteht ein großer Bedarf darin, regenerative Energien effizient zur Wasserstoffproduktion zu nutzen, was mit der in den Fig. 2 und Fig. 3 dargestellten photoelektrochemischen Zelle 1 erzielbar ist.

Fig. 2a und Fig. 2b zeigt jeweils eine erste Ausführungsform der photoelektrochemischen Wasserzerlegung, welche auf einem O²⁻-Ionen leitenden Feststoffoxid-Material als Elektrolyten beruht.

Als photoaktives Material für die erste Elektrode 2 wird gemäß Fig. 2a ein hitzebeständiges Metalloxid, zweckmäßigerweise TiO₂ oder Cu₂O, mit einer porösen Struktur und halbleitenden Eigenschaften verwendet. Die erste Elektrode 2 wird an einer Seite der Sonnenstrahlung 3' ausgesetzt. An der von der Sonne 3 abgewandten Seite der ersten Elektrode 2 ist der Ionenleiter 6 angeordnet, welcher durch einen hochtemperaturbeständigen Feststoff-Elektrolyten, insbesondere einen Feststoffoxid-Elektrolyten (z.B. Yttrium dotiertes Zirkoniumdioxid, kurz: YSZ, "Yttria-stabilized zirconia") gebildet ist. Bei Bestrahlung der ersten Elektrode 2 werden im halbleitenden Material der ersten Elektrode 2 Elektron-Loch-Paare generiert (GI. 1).

*2hv →2e⁻* + *2h*⁺ GI. 1

Die Elektronen e- bewegen sich in Richtung der bestrahlten Seite der ersten Elektrode 2. Die Löcher h⁺ wandern entgegen dem Elektronenfluss zur Grenzfläche mit dem Ionenleiter 6. Die Elektronen e- werden über einen äußeren Stromkreis, d.h. über den Elektronenleiter 4, zur gegenüberliegenden Elektrode 5 geleitet, welche in der Ausführung gemäß Fig. 2a die Kathode bildet. Die Elektroden 2, 5 schließen den Feststoffoxid-Elektrolyten als dünne Membrane ein. Durch den Elektronenfluss wird die dem Ionenleiter 6 zugewandte Seite des halbleitenden Materials der ersten Elektrode 2 in der Ausführung gemäß Fig. 2a zur Anode. Um die Elektron-Loch-Rekombination in der ersten Elektrode 2 gering zu halten, wird der solar erzeugte Elektronenfluss über den Elektronenleiter 4 durch die externe Spannungsquelle 15 unterstützt, welche das photoelektrisch generierte elektrische Feld verstärkt. Mittels der Spannungsquelle 15 werden die generierten Elektronen e- "abgesaugt", wodurch die Elektron-Loch-Rekombination wesentlich verringert wird.

An der die Kathode bildenden zweiten Elektrode 5 wird überhitzter Wasserdampf H₂O_{(g)}, welcher den Ausgangsstoff für die Wasserstoffproduktion bildet, mit einer Temperatur von mehr als 300°C, insbesondere mehr als 500°C, zugeleitet. Die über den Elektronenleiter 4 zur zweiten Elektrode 5 gelangten Elektronen e- bewirken, dass Wasserdampf H₂O_{(g)} zu molekularem Wasserstoff H₂ und Sauerstoffionen O²⁻reduziert wird (GI. 2).

*H₂O_{(g)}*+ *2e*⁻ *→ H_{2(g)}* + *O*^{*2*-} GI. 2

Die O²⁻-Ionen gelangen durch den Feststoff-Elektrolyten des membranartigen Ionenleiters 6 an die Grenzschicht zur Anode der halbleitenden ersten Elektrode 2. Dort rekombinieren die O²⁻-Ionen mit den von der anderen Seite dorthin wandernden Löchern h⁺ zu molekularem Sauerstoff O₂ (GI. 3).

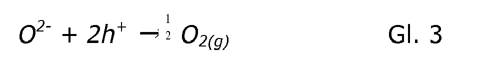

Durch Porendiffusion durchquert der molekulare Sauerstoff O₂ das halbleitende Material der ersten Elektrode 2, tritt an der bestrahlten Seite aus und wird als Nebenprodukt abgeleitet. Die Gesamtreaktion (GI. 4) der photoelektro-thermochemischen Wasserzerlegung ist die Summe der einzelnen Reaktionsschritte aus den Gleichungen GI. 1 - GI. 3.

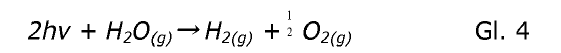

Das Verfahren zur Wasserzerlegung läuft bei Betriebstemperaturen von mehr als 300°C, vorzugsweise zwischen 500° und 900°C, ab, wobei die erhöhte Betriebstemperatur zumindest teilweise durch den Wärmeeintrag der Sonnenstrahlung 3' erzeugt wird. Bei Temperaturen von 500 - 900°C bzw. 773,15 - 1173,15 K reduziert sich dabei das thermodynamisch erforderliche Spannungspotential (Zersetzungsspannung) von 1,23 V bei Raumtemperatur (298,15 K) und einem Umgebungsdruck von 1 bar auf etwa 1 - 0,9 V. Um den Wärmeeintrag in die photoelektrochemische Zelle 1 zu erhöhen, wird bevorzugt konzentrierte Sonnenstrahlung 3" verwendet, wie im Zusammenhang mit Fig. 5 weiter erläutert wird.

Fig. 2b zeigt eine Variante der photoelektrochemischen Zelle 1 gemäß Fig. 2a, bei welcher als photoelektrisch aktives Material der ersten Elektrode 2 ein Mischmetalloxid mit Perowskit-Struktur, bevorzugt Strontiumtitanat, vorgesehen ist, welches mit einer Akzeptorsubstanz, vorzugsweise Eisen, dotiert ist. Die Verwendung von Fe-dotiertem Strontiumtitanat mit der Summenformel SrTi₁₋ₓFeₓO₃ ermöglicht eine signifikante Absenkung der Bandlücke der ersten Elektrode 2, so dass ein vergleichsweise großer Anteil des Sonnenlichts zur Zerlegung des Ausgangsstoffes genutzt werden kann. Die Fe-Dotierung x des bevorzugten Elektrodenmaterials SrTi₁₋ₓFeₓO₃ beträgt vorzugsweise weniger als 0,5, um die Entstehung von Mischphasen zu verhindern.

Wie aus Fig. 2b weiters ersichtlich, ist hierbei die erste Elektrode 2 als Kathode und die zweite Elektrode 5 als Anode ausgebildet, so dass die angeregten Elektronen von der zweiten Elektrode 5 zur ersten Elektrode 2 fließen. Bei dieser Ausführung wird der Ausgangsstoff der ersten Elektrode 2 zugeführt. Der molekulare Sauerstoff O₂ wird hierbei an der zweiten Elektrode 5 gewonnen, während der molekulare Wasserstoff H₂ an der ersten Elektrode 2 entsteht.

Das Diagramm von Fig. 2c zeigt am Beispiel der in Fig. 2b dargestellten photoelektrochemischen Zelle 1 den Strom I zwischen den Elektroden 2, 5 in Abhängigkeit von der äußeren Spannung U der Stromquelle 15. Aus Fig. 2c ist eine Strom-Spannungs-Kennlinie 1' (obere Kennlinie in Fig. 2c) für den Fall ohne Sonneneinstrahlung und eine Strom-Spannungs-Kennlinie 1" (untere Kennlinie in Fig. 2c) für der Betriebs der photoelektrochemischen Zelle 1 unter Sonneneinstrahlung dargestellt. Demnach wird ohne photoelektrische Aktivierung erst bei höheren negativen Spannungswerten ein nichtverschwindender Strom I zwischen den Elektroden 2, 5 erreicht. Demgegenüber bewirkt die Bestrahlung der ersten Elektrode 2, vgl. Strom-Spannungs-Kennlinie 1", dass bereits ohne äußere Spannung U ein Strom I zwischen den Elektroden 2, 5 fließt. Durch Anlegen einer (negativen) äußeren Spannung U wird der Stromfluss entsprechend erhöht.

Fig. 3 zeigt eine alternative Ausführung der photoelektrochemischen Zerlegung von Wasser in molekularen Wasserstoff und molekularen Sauerstoff, welche ein H⁺-Ionen (Protonen) leitendes Feststoffoxid-Material als Elektrolyten vorsieht. Zum Transport der H⁺-Ionen ist insbesondere ein Lanthan-Mischoxid geeignet.

Die in der photoelektrochemischen Zelle 1 gemäß Fig. 3 ablaufenden Prozesse sind durch die unten angegebenen Gleichungen 5-9 gekennzeichnet.

An der ersten Elektrode 2 erfolgt, entsprechend Fig. 2a, die solare Generierung von Elektron-Loch-Paaren (GI. 5):

*2hv* →*2e⁻* + *2h*⁺ GI. 5

Bei dieser Ausführung wird der Wasserdampf H₂O_{(g)} der ersten Elektrode 2 zugeleitet, welche zweckmäßigerweise aus Cu₂O gefertigt ist. Die photoelektrisch generierten Löcher h⁺ bewirken in der ersten Elektrode 2 eine anodische Oxidation des Wasserdampfes *H₂O_{(g)}*, wobei molekularer Sauerstoff O₂ und Wasserstoff-Ionen H⁺, die in Richtung der Grenzschicht zum Ionenleiter 6 wandern, entstehen (GI. 6):

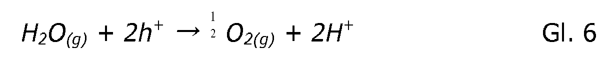

Der Sauerstoff O₂ wird als Nebenprodukt der Wasserstoff-Gewinnung abgeleitet. Die Wasserstoff-Ionen H⁺ gelangen über den Ionenleiter 6 zur zweiten Elektrode 5, d.h. zur Kathode, welche zweckmäßigerweise aus Platin gefertigt ist. An der zweiten Elektrode 5 kombinieren die H⁺-Ionen mit den zugeleiteten Elektronen e- zu molekularem Wasserstoff H₂, der als Produktgas abgeleitet wird (GI. 7):

*2H*⁺ + *2e*⁻ →*H_{2(g)}* GI. 7

Die photoelektrochemische Gesamtreaktion liest sich daher wie folgt (GI. 8):

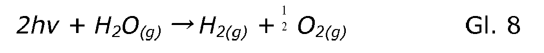

Je nach Ausführung der photoelektrochemischen Zelle 1 gemäß Fig. 3 kann der Elektronenfluss zwischen den Elektroden 2, 5 auch entgegen der dargestellten Richtung erfolgen (eine solche Anordnung der Elektroden 2, 5 ist in Fig. 2b für die darin gezeigte Zelle 1 gezeigt); in diesem Fall wird bei der Zelle 1 gemäß Fig. 3 an der zweiten, als Anode ausgebildeten Elektrode 5 das Wasser zugeführt und der molekulare Sauerstoff O₂ abgeführt, während an der ersten, als Kathode ausgebildeten Elektrode 2 der molekulare Wasserstoff H₂ entsteht.

Wie aus Fig. 2 und Fig. 3 weiters schematisch ersichtlich, ist zwischen dem Feststoff-Elektrolyt und der ersten Elektrode 2 jeweils eine Katalysator- bzw. Elektronenleitschicht 16 angeordnet. Das Material für diese Katalysator- bzw. Elektronenleitschicht 16 richtet sich nach den Ionen, die über den Elektrolyten transportiert werden. Zur Begünstigung der Wasserstoffentwicklung im Fall der H⁺-Ionenleitung kann zweckmäßigerweise eine Dünnschicht aus Platin vorgesehen sein; die Sauerstoffentwicklung im Fall der O²⁻-Ionenleitung kann mit einer Katalysator- bzw. Elektronenleitschicht 16 aus Rutheniumoxid (RuO₂) katalysiert werden.

Insbesondere bei Verwendung eines Perowskit-Mischmetalloxids (z.B. Strontiumtitanat) für die photoaktive erste Elektrode 2 hat die Anordnung der Elektronenleitschicht 16 zudem den besonders vorteilhaften Effekt, dass hiermit der elektrische Oberflächen- bzw. Lateralwiderstand des Kathodenmaterials herabgesetzt werden kann, welcher im Fall von Strontiumtitanat ca. 10³ Ωcm⁻² beträgt. Die Elektronenleitschicht 16 soll hierbei den Ionentransport (z.B. von O²⁻-Ionen) zwischen den Elektroden 2, 5 möglichst wenig beeinträchtigen. Hierfür ist es günstig, wenn die Elektronenleitschicht 16 eine netz-, streifen- oder mäanderartige Struktur aufweist, welche den Ionenfluss begünstigt. Als gut leitende Materialien für die Elektronenleitschicht 16 haben sich Platin (Pt), Silber (Ag), Gold (Au), aber auch elektrisch leitende Mischmetalloxide, wie Lanthan-Strontium-Cobalat (LaSrCoO₃, kurz LSC) oder Lanthan-Strontium-Manganat (LaSrMnO₃, kurz LSM) als vorteilhaft erwiesen.

Fig. 4 zeigt schematisch eine photoelektrochemische Zelle 1, die gemäß einer weiteren Ausführung der Erfindung zur Reduktion von Kohlendioxid CO₂ in Kohlenmonoxid CO eingerichtet ist. Hinsichtlich der Materialien für den Ionenleiter 6, die Katalysator- bzw. Elektronenleitschicht 16 und die Elektroden 2, 5 kann auf die im Zusammenhang mit Fig. 3 erläuterte photoelektrochemische Zelle 1 mit O²⁻-Ionen leitendem Feststoffoxid-Material als Elektrolyten verwiesen werden.

GI. 9 zeigt die an der ersten Elektrode 2 stattfindende Generierung von Elektron-Loch-Paaren:

*2hv →2e⁻* + *2h*⁺ GI. 9

Das Kohlendioxid CO₂ wird der zweiten Elektrode 5 zugeführt, um mit den zugeleiteten Elektronen e- zu Kohlenmonoxid CO und Sauerstoff-Ionen O²- zu reagieren (GI. 10):

*CO_{2(g)}* + *2e⁻ → CO_{(g)}* + O^{*2*-} GI. 10

Die O²⁻-Ionen durchwandern den Ionenleiter 6, um mit den photogenerierten Löchern h⁺ unter Bildung von molekularem Sauerstoff zu rekombinieren (GI. 11):

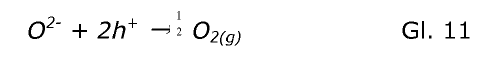

Somit lautet die photoelektrochemische Gesamtreaktion:

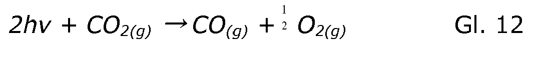

Die Umsetzung des Kohlendioxids erfolgt bei einer Temperatur von zumindest 600° Celsius, vorzugsweise mehr als 700° Celsius, um die anhand der Wasserzerlegung erläuterten Vorteile der verringerten Bandlücke des halbleitenden Materials der ersten Elektrode 2 bzw. der geringeren Zersetzungsspannung zu nutzen. Wie erwähnt, kann die Anordnung der Elektroden 2, 5 auch vertauscht sein, so dass die erste Elektrode 2 als Kathode und die zweite Elektrode 5 als Anode ausgebildet ist. In diesem Fall wird an der ersten, als Kathode ausgebildeten Elektrode 2 das Kohlendioxid CO₂ zugeführt und das entstehende Kohlenmonoxid CO abgeleitet. An der zweiten, als Anode ausgebildeten Elektrode 5 wird der molekulare Sauerstoff abgeleitet.

Fig. 5 zeigt in einem schematischen Blockschaltbild eine Anordnung 17 zur Wasserstoffproduktion mit einer photoelektrochemischen Zelle 1 gemäß Fig. 2a; selbstverständlich kann die Anordnung 17 alternativ mit der in Fig. 2b, Fig. 3 oder Fig. 4 gezeigten elektrochemischen Zelle 1 ausgestattet sein, um eine alternative Ausführung der Wasserzerlegung (gemäß Fig. 2b, Fig. 3) bzw. die Reduktion von Kohlendioxid (gemäß Fig. 4) zu ermöglichen.

Wie aus Fig. 5 ersichtlich, ist die photoelektrochemische Zelle 1 mit einem Isolierkörper 18 ummantelt, der die photoelektrochemische Zelle 1 vor Wärmeabstrahlung schützt, um die gewünschte erhöhte Betriebstemperatur (in Fig. 5 mit T_{B} bezeichnet) aufrechtzuerhalten. Der Isolierkörper 18 weist eine in Richtung der einfallenden Sonnenstrahlung 3' offene Ausnehmung 19 auf, welche die photoelektrochemische Zelle 1 aufnimmt. Die Sonnenstrahlung 3' wird über das Eintrittsfenster 14 in die photoelektrochemische Zelle 1 eingekoppelt.

Um den Wärmeeintrag in die photoelektrochemische Zelle 1 zu erhöhen, ist zwischen der Strahlungsquelle 3 und der photoelektrochemischen Zelle 1 eine Einrichtung 19 zur Bündelung der einfallenden Sonnenstrahlung 3' angeordnet. Die Intensität der auf die erste Elektrode 2 auftreffenden konzentrierten Sonnenstrahlung 3" wird mittels der Einrichtung 19 vorzugsweise um einen Faktor von zumindest 30, insbesondere um einen Faktor von zumindest 50, gegenüber der Intensität der einfallenden Sonnenstrahlung 3' erhöht. Die Fokussierung der Sonnenstrahlung kann mit im Stand der Technik hinlänglich bekannten Fokussiervorrichtungen erreicht werden; im Fall des in Fig. 1 und Fig. 5 dargestellten Paneels 12 mit im Wesentlichen ebener Elektrode 2 ist zweckmäßerweise eine flächen-fokussierende Einrichtung 19 vorgesehen, beispielsweise ein von Solarturm-Kraftwerken bekannter Heliostat. Der Wärmeeintrag durch die konzentrierte Sonnenstrahlung 3" ermöglicht es, die Betriebstemperatur T_{B} der Zelle 1 auf einem gegenüber Raumtemperatur wesentlich erhöhten Niveau zu halten. Wie vorstehend beschrieben wurde, ist die erhöhte Betriebstemperatur T_{B} im Hinblick auf den Wirkungsgrad der in der phototelektrochemischen Zelle 1 ablaufenden Prozesse vorteilhaft. In Fig. 5 ist weiters schematisch eine Optikeinheit 21 eingezeichnet, welche dazu eingerichtet ist, die mittels der Einrichtung 19 konzentrierte Sonnenstrahlung 3" in geeigneter Weise auf die photoaktive erste Elektrode 2 abzubilden. Aus Fig. 5 ist weiters schematisch die externe Strom- bzw. Spannungsquelle 15 ersichtlich, welche optional mit dem Elektronenleiter 4 verbunden wird, um den Stromfluss zwischen den Elektroden 2, 5 zu unterstützen.

Die Anordnung 17 ist dazu eingerichtet, die erhöhte Betriebstemperatur T_{B} über die eingekoppelte Sonnenstrahlung 3', 3" selbsttätig aufrechtzuerhalten. Um die Betriebstemperatur T_{B} in einem Aufheizvorgang zu erreichen, ist eine externe Wärmequelle 22 vorgesehen, welche zur Übertragung eines Wärmestroms Q₁ auf die photoelektrochemische Zelle 1 eingerichtet ist. Die externe Wärmequelle 22 kann zudem zur Pufferung von im Betrieb auftretenden Schwankungen der Sonnenstrahlung 3' dienen. Zu diesem Zweck ist die Wärmequelle 22 dazu eingerichtet, je nach Bedarf einen variablen Wärmestrom Q₁ an die photoelektrochemische Zelle 1 zu übertragen bzw. einen variablen Wärmestrom Q₂ von der photoelektrochemischen Zelle 1 aufzunehmen. Die Wärmequelle 22 wird beispielsweise von einer Solaranlage versorgt; selbstverständlich ist auch eine Wärmequelle 22 auf Basis von elektrischer oder chemischer Energie denkbar.

Die Anordnung 17 weist eine Zufuhr 23 für den Ausgangsstoff, d.h. Wasser H₂0 auf, das an einen Überhitzer 24 geleitet wird, der überhitzten Wasserdampf H₂0_{(g)} mit einer Temperatur von vorzugsweise zumindest 300° erzeugt. Der überhitzte Wasserdampf H₂0_{(g)} wird der zweiten Elektrode 5 der photoelektrochemischen Zelle 1 zugeführt, in der die im Zusammenhang mit Fig. 2 beschriebenen Prozesse zur Zerlegung des Wasserdampfs H₂0_{(g)} in molekularen Sauerstoff O₂ und molekularen Wasserstoff H₂ ablaufen. An der zweiten Elektrode 5 ensteht ein Gemisch aus molekularem Wasserstoff H₂ und Wasserdampf H₂0_{(g)}, das eine bestimmte Wärmemenge Q enthält. Das Gemisch aus molekularem Wasserstoff H₂ und Wasserdampf H₂0_{(g)} wird einem Abscheider 25 zugeführt, welcher das Produktgas H₂ vom verbleibenden Wasserdampf H₂0_{(g)} trennt. Der Abscheider 25 ist weiters als Wärmeenergie-Rückgewinnungseinrichtung dazu eingerichtet, einen Wärmestrom Q₃ des H₂/H₂0_{(g)}-Gasgemisches an den Überhitzer 24 zu übertragen. Demnach wird die Wärmeenergie des Produktgases (bzw. des verbleibenden Ausgangsstoffes) in einem Wärmeenergie-Rückgewinnungskreislauf zur Erhitzung des Ausgangsstoffes herangezogen. Zu diesem Zweck kann ein Wärmetauscher verwendet werden, wofür im Stand der Technik vielfältige Ausführungen bekannt sind. Der Abscheider 25 ist mit einem Speicher 26 verbunden, welcher das abgekühlte Produktgas H₂ aufnimmt. Das abgekühlte Wasser H₂O wird einem gesonderten Speicher 27 zugeführt, der über eine Rückführung 28 mit der Zufuhr 23 verbunden sein kann, um einen geschlossenen Wasserkreislauf zu erhalten. Bei der Wasserzerlegung in der photoelektrochemischen Zelle 1 entsteht an der ersten Elektrode 2 (gemäß der in Fig. 3 dargestellten Ausführung an der zweiten Elektrode 5) molekularer Sauerstoff O₂, der über die Abführung 11 zu einer weiteren Wärmeenergie-Rückgewinnungseinrichtung 29 geleitet wird, welche einen Wärmestrom Q₄ an den Überhitzer 24 überträgt, um die Wärmeenergie des Nebenprodukts zur Erhitzung des Ausgangsstoffes zu nutzen. Das abgekühlte Nebenprodukt O₂ wird einem Speicher 30 zugeführt.

Um Schwankungen der Betriebstemperatur T_{B} ausgleichen zu können, ist ein Regelkreis 31 vorgesehen, welcher die Betriebstemperatur T_{B} auf einen festgelegten Wert regelt. Der Regelkreis 31 weist ein Messelement 32 zum Messen der Betriebstemperatur T_{B} auf, das beispielsweise an der zweiten Elektrode 5 angeordnet sein kann. Das Messelement 32 liefert die Betriebstemperatur T_{B} an einen Regler 33, welcher eine Regelabweichung zu einem festgelegten Wert für die Betriebstemperatur T_{B} ermittelt. Zur Anpassung der Betriebstemperatur T_{B} ist der Regler 33 mit der externen Wärmequelle 22 verbunden, um den Wärmeeintrag in die photoelektrochemische Zelle 1 entsprechend der Regelabweichung zu erhöhen bzw. zu erniedrigen. Alternativ oder zusätzlich kann der Regler 33 mit einer Nachführung 34 verbunden sein, welche den Neigungswinkel zwischen der Sonnenstrahlung 3' (bzw. 3") und der photoelektrochemischen Zelle 1, speziell der ersten Elektrode 2, beeinflussen kann.

In den Fig. 6a und 6b ist eine zur paneelartigen Ausbildung der photoelektrochemischen Zelle 1 gemäß den Fig. 1, 5 alternative Ausführungsform der Erfindung gezeigt, welche einen stabförmigen bzw. zylindrischen Aufbau vorsieht.

Gemäß Fig. 6a, 6b sind das Eintrittsfenster 14, die erste Elektrode 2, der Elektrolyt 6 und die zweite Elektrode 5, von außen nach innen, als aneinander anschließende hohlzylindrische Schichten ausgebildet. Alternativ wäre auch ein Aufbau mit andersartig gekrümmten, beispielsweise sphärisch gekrümmten, Schichten denkbar. Zudem ist ein halbschalenförmiger Isolierkörper 18 ersichtlich, welcher die von der Strahlungsquelle 3 abgewandte Hälfte der photoelektrochemischen Zelle 1 ummantelt.

In Fig. 6b ist weiters schematisch die Zuleitung des Ausgangsstoffes in Pfeilrichtung 7 und die Ableitung des Produktgases in Pfeilrichtung 10 an der zweiten Elektrode 5 veranschaulicht. Das bei der Zerlegung des Ausgangsstoffes entstehende gasförmige Nebenprodukt wird über eine Abführung 11 in Pfeilrichtung 11' abgeleitet.

Bei der in Fig. 6a, 6b gezeigten Ausführung der photoelektrochemischen Zelle 1 kann eine linien-fokussierende Einrichtung 19 zur Bündelung der einfallenden Sonnenstrahlung 3' vorgesehen sein, welche beispielsweise durch einen Parabolrinnen- oder Fresnel-Konzentrator gebildet sein kann.

Die in Fig. 6a, 6b dargestellte Ausführung der photoelektrochemischen Zelle 1 kann entsprechend den anhand der Fig. 1 bis 5 erläuterten Ausführungsvarianten betrieben werden, so dass hierzu - insbesondere auch betreffend die verwendeten Materialien, bevorzugten Betriebsbedingungen und Temperaturbereiche - auf die vorstehenden Erläuterungen verwiesen werden kann.

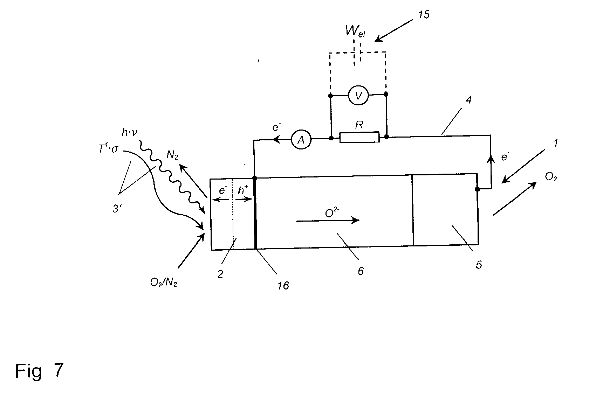

Fig. 7 zeigt schematisch das Funktionsprinzip einer gemäß einer weiteren Ausführungsform der Erfindung ausgebildeten photoelektrochemischen Zelle 1, welche zur Abtrennung eines Gasanteils aus einem Gasgemisch eingerichtet ist. In der gezeigten Ausführung wird an der ersten Elektrode 2 ein Gasgemisch, in der gezeigten Ausführung Luft, zuleitet. Der Luftstrom enthält bekanntlich molekularen Stickstoff N₂ und molekularen Sauerstoff O₂. Wie zuvor beschrieben, werden an der ersten Elektrode 2 unter Sonneneinstrahlung Ladungsträger gebildet, welche mit dem zugeführten Gasgemisch reagieren. Hierbei werden O²⁻-Ionen gebildet, die durch das Elektrolyt 6 zur zweiten Elektrode 5 geleitet werden, an welcher der molekulare Sauerstoff O₂ entsteht. Hiermit wird eine photonengestütze Luftpumpe zur Verfügung gestellt.

## Patentansprüche

1. Photoelektrochemische Zelle (1) zur solarbetriebenen Zerlegung eines Ausgangsstoffs, insbesondere Wasser oder Kohlendioxid, in ein darin gebundenes Produktgas, insbesondere Wasserstoff bzw. Kohlenmonoxid, mit einer Zuleitung (7) für den Ausgangsstoff und einer Ableitung (9) für das gewonnene Produktgas, mit einer im Betrieb einer Sonnenstrahlung (3', 3") ausgesetzten ersten Elektrode (2) aus einem photoelektrisch aktiven Material und einer zweiten Elektrode (5), wobei die Elektroden (2, 5) in einem geschlossenen Stromkreis über einen Elektronenleiter (4) zum Transport von durch die Sonnenstrahlung (3', 3") in der ersten Elektrode (2) angeregten Elektronen und einen Ionenleiter (6) zum Transport von bei der Zerlegung des Ausgangsstoffes entstehenden Ionen miteinander verbunden sind, **dadurch gekennzeichnet, dass** als Ionenleiter (6) ein zwischen den Elektroden (2, 5) angeordnetes , bei einer Betriebstemperatur von (TB) ≥ 300°C, vorzugsweise ≥ 500°C , hitzebeständiges Feststoff-Material vorgesehen ist.

2. Photoelektrochemische Zelle (1) nach Anspruch 1, **dadurch gekennzeichnet, dass** der Elektrolyt aus einem Feststoffoxid-Material, insbesondere Zirconiumdioxid (Zr02) oder einem Lanthan-Mischoxid, vorzugsweise Lanthanzirkonat (LaZr03) oder Lanthancerat (LaCe03), besteht, wobei bevorzugterweise das Feststoffoxid-Material mit einem Seltenerdmetall, insbesondere mit Yttrium, dotiert ist.

3. Photoelektrochemische Zelle (1) nach Ansprüche 1 oder 2, **dadurch gekennzeichnet, dass** als photoelektrisch aktives Material der ersten Elektrode (2) ein Mischmetalloxid, vorzugsweise mit Perowskit-Struktur, insbesondere Strontiumtitanat (SrTi03) oder Kalium-Tantalat (KTa03), vorgesehen ist, wobei vorzugsweise das Perowskit-Mischmetalloxid der ersten Elektrode (2) mit einer Akzeptorsubstanz, insbesondere Eisen, dotiert ist.

4. Photoelektrochemische Zelle (1) nach einem der Ansprüche 1 bis 3, **dadurch gekennzeichnet, dass** die erste Elektrode aus einem Übergangsmetalloxid (MeOx), vorzugsweise Fe203, CoO, Cu20, NiO, Sn02, Ti02, W03 oder ZnO, gefertigt ist und/oder die zweite Elektrode (5) aus einem katalytisch wirksamen Material, insbesondere Ru02, LaSrMn03, Pt, eine Metall-Keramik-Mischung, vorzugsweise Ni-YSZ, oder Ni gefertigt ist

5. Photoelektrochemische Zelle (1) nach einem der Ansprüche 1 bis 4, **dadurch gekennzeichnet, dass** der Elektronenleiter (4) eine Spannungs- bzw. Stromquelle (15) zur Unterstützung des Transports der durch die Sonnenstrahlung (3', 3") angeregten Elektronen aufweist.

6. Photoelektrochemische Zelle (1) nach einem der Ansprüche 1 bis 5, **dadurch gekennzeichnet, dass** eine der Elektroden (2, 5) mit einer Abführung (11) für ein durch die Zerlegung des Ausgangsstoffes entstehendes gasförmiges Nebenprodukt, insbesondere Sauerstoff, verbunden ist.

7. Photoelektrochemische Zelle (1) nach einem der Ansprüche 1 bis 6, **dadurch gekennzeichnet, dass** zwischen einer der Elektroden (2, 5) und dem Elektrolyt eine Katalysator- bzw. Elektronenleitschicht (16), insbesondere aus Ag, Au, Pt, Ru02, Ni, Ni-YSZ, oder LaSrMn03, oder LaSrCo03 angeordnet ist.

8. Photoelektrochemische Zelle (1) nach einem der Ansprüche 1 bis 7, **dadurch gekennzeichnet, dass** der ersten Elektrode (2) eine Einrichtung (19) zur Bündelung der einfallenden Sonnenstrahlung (3') zugeordnet ist, welche dazu eingerichtet ist, die Intensität einer auf die erste Elektrode (2) gebündelten Sonnenstrahlung (3") um zumindest das 30-fache, vorzugsweise um zumindest das 50-fache, gegenüber der einfallenden Sonnenstrahlung (3') zu erhöhen.

9. Photoelektrochemische Zelle (1) nach einem der Ansprüche 1 bis 8, **dadurch gekennzeichnet, dass** die Elektroden (2, 5) und der Elektrolyt zur Erzielung eines Paneels (12) in einem flachen Gehäuse (13) aufgenommen sind, das ein die erste Elektrode (2) abdeckendes lichtdurchlässiges Eintrittsfenster (14), insbesondere eine Glasscheibe, aufweist.

10. Photoelektrochemische Zelle (1) nach Anspruch 9, **dadurch gekennzeichnet, dass** das Gehäuse (13) von einem Isolierkörper (18) ummantelt ist, der eine dem Eintrittsfenster (14) entsprechende Ausnehmung aufweist.

11. Verfahren zur solarbetriebenen Zerlegung eines Ausgangsstoffs, insbesondere Wasser oder Kohlendioxid, in ein darin gebundenes Produktgas, insbesondere Wasserstoff bzw. Kohlenmonoxid, wobei in einer photoelektrisch aktiven ersten Elektrode (2) mittels Sonnenstrahlung (3', 3") Ladungsträger in Form von Elektron-Loch-Paaren angeregt werden, welche zu einer zweiten Elektrode (5) geleitet werden, wobei einer der Elektroden (2, 5) der Ausgangsstoff zugeleitet wird, der mittels der angeregten Ladungsträger zerlegt wird, wobei Ionen erzeugt werden, die in einem geschlossenen Stromkreis zur jeweils anderen Elektrode (2, 5) transportiert werden, wobei das gewonnene Produktgas abgeleitet wird, **dadurch gekennzeichnet, dass** der Ionentransport zwischen den Elektroden (2, 5) über ein Elektrolyt aus einem, bei einer Betriebstemperatur von (TB) ≥300°C, vorzugsweise ≥ 500°C hitzebeständigen Feststoff-Material, insbesondere ein Feststoffoxid-Material, erfolgt.

12. Verfahren nach Anspruch 11, **dadurch gekennzeichnet, dass** die erste Elektrode (2) mit konzentrierter Sonnenstrahlung (3") bestrahlt wird, deren Inten sität um zumindest das 30-fache, vorzugsweise um zumindest das 50-fache, gegenüber der Intensität der einfallenden Sonnenstrahlung (3') erhöht ist, wobei bevorzugterweise die Betriebstemperatur (T_{B}) in einem Aufheizvorgang mittels einer externen Wärmequelle (22), insbesondere einer Solaranlage, erreicht wird.

13. Verfahren nach Anspruch 11 oder 12, **dadurch gekennzeichnet, dass** zur Wasserzerlegung als Ausgangsstoff überhitzter Wasserdampf mit einer Temperatur von zumindest 300° Celsius, vorzugsweise mehr als 500° Celsius, zugeleitet wird, wobei bevorzugterweise zur Kohlendioxidzerlegung als Ausgangsstoff Kohlendioxid mit einer Temperatur von zumindest 600° Celsius, vorzugsweise mehr als 700° Celsius, zugeleitet wird.

14. Verfahren nach einem der Ansprüche 11 bis 13, **dadurch gekennzeichnet, dass** der Ausgangsstoff ein Gasgemisch, insbesondere Luft, ist, von welchem ein Gasanteil, insbesondere Sauerstoff, als Produktgas abgetrennt wird, wobei bevorzugterweise die Wärmeenergie des an der zweiten Elektrode (5) gewonnenen Produktgases bzw. eines an der ersten Elektrode (2) entstehenden gasförmigen Nebenprodukts in einem Wärmeenergie-Rückgewinnungskreislauf zur Erhitzung des Ausgangsstoffs herangezogen wird.

15. Verfahren nach einem der Ansprüche 11 bis 14, **dadurch gekennzeichnet, dass** die Betriebstemperatur (T_{B}) gemessen und auf einen festgelegten Wert geregelt wird.

## Claims

1. A photoelectrochemical cell (1) for the solar-driven decomposition of a starting material, especially water or carbon dioxide, into a product gas bound therein, especially hydrogen or carbon monoxide, comprising a feed line (7) for the starting material and a discharge line (9) for the obtained product gas, a first electrode (2) made of a photoelectrically active material and exposed to solar radiation (3', 3") during operation, and a second electrode (5), wherein the electrodes (2, 5) are connected to each other in a closed circuit by means of an electron conductor (4) for transporting electrons excited by the solar radiation (3', 3") in the first electrode (2) and an ion conductor (6) for transporting ions produced in the decomposition of the starting material, **characterised in that** a solid material, which is arranged between the electrodes (2, 5) and is heat-resistant at an operating temperature (T_{B}) of ≥ 300°C, preferably ≥ 500°C, is provided as an ion conductor (6).

2. A photoelectrochemical cell (1) according to claim 1, **characterised in that** the electrolyte consists of a solid oxide material, especially zirconium dioxide(ZrO₂) or a mixed lanthanum oxide, preferably lanthanum zirconate (LaZrO₃) or lanthanum cerate (LaCeO₃), wherein preferably the solid oxide material is doped with a rare earth metal, especially yttrium.

3. A photoelectrochemical cell (1) according to one of the claims 1 or 2, **characterised in that** a mixed metal oxide, preferably with perovskite structure, especially strontium titanate (SrTiO₃) or potassium tantalate (KTaO₃), is provided as a photoelectrically active material of the first electrode (2), wherein preferably the perovskite mixed metal oxide of the first electrode (2) is doped with an acceptor substance, especially iron.

4. A photoelectrochemical cell (1) according to one of the claims 1 to 3, **characterised in that** the first electrode is made of a transition metal oxide (MeOₓ), preferably Fe₂O₃, CoO, Cu₂O, NiO, SnO₂, TiO₂, WO₃ or ZnO, and/or the second electrode (5) is made of a catalytically active material, especially RuO₂, LaSrMnO₃, Pt, a ceramic-metal mixture, preferably Ni-YSZ, or Ni.

5. A photoelectrochemical cell (1) according to one of the claims 1 to 4, **characterised in that** the electron conductor (4) comprises a voltage or current source (15) for supporting the transport of the electrons excited by solar radiation (3', 3").

6. A photoelectrochemical cell (1) according to one of the claims 1 to 5, **characterised in that** one of the electrodes (2, 5) is connected to a discharge (11) for a gaseous by-product produced by the decomposition of the starting material, especially oxygen.

7. A photoelectrochemical cell (1) according to one of the claims 1 to 6, **characterised in that** a catalyst or electron conducting layer (16), especially made of Ag, Au, Pt, RuO₂, Ni, Ni-YSZ, or LaSrMnO₃, or LaSrCoO₃, is arranged between one of the electrodes (2, 5) and the electrolyte.

8. A photoelectrochemical cell (1) according to one of the claims 1 to 7, **characterised in that** the first electrode (2) is assigned a device (19) for concentrating the incident solar radiation (3'), which is formed to increase the intensity of solar radiation (3") concentrated on the first electrode (2) by at least 30 times, preferably at least 50 times, relative to the incident solar radiation (3').

9. A photoelectrochemical cell (1) according to one of the claims 1 to 8, **characterised in that** the electrodes (2, 5) and the electrolyte are accommodated in a flat housing (13) for achieving a panel (12), which housing comprises a transparent entrance window (14), especially a glass pane, which covers the first electrode (2).

10. A photoelectrochemical cell (1) according to claim 9, **characterised in that** the housing (13) is enclosed by an insulating body (18) which comprises a recess that corresponds to the entrance window (14).

11. A method for the solar-driven decomposition of the starting material, especially water or carbon dioxide, into a product gas bound therein, especially hydrogen or carbon monoxide, wherein charge carriers in the form of electron-hole pairs are excited in a photoelectrically active first electrode (2) by means of solar radiation (3', 3"), which are conducted to a second electrode (5), wherein one of the electrodes (2, 5) is supplied with the starting material which is decomposed by means of the excited charge carriers, wherein ions are produced which are transported in a closed electric circuit to the respective other electrode (3, 5), wherein the obtained product gas is discharged, **characterised in that** the ion transport between the electrodes (2, 5) occurs via an electrolyte made of a solid material, especially a solid oxide material, which is heat-resistant at an operating temperature (T_{B}) of ≥ 300°C, preferably ≥ 500°C.

12. A method according to claim 11, **characterised in that** the first electrode (2) is irradiated with concentrated solar radiation (3") whose intensity is increased by at least 30 times, preferably at least 50 times, relative to the intensity of the incident solar radiation (3'), wherein preferably the operating temperature (T_{B}) is reached in a heating process by means of an external heat source (22), especially a solar installation.

13. A method according to claim 11 or 12, **characterised in that** superheated steam with a temperature of at least 300°C, preferably more than 500°C, is supplied as a starting material for the decomposition of water, wherein preferably carbon dioxide with a temperature of at least 600°C, preferably more than 700°C, is supplied as a starting material for the decomposition of carbon dioxide.

14. A method according to one of the claims 11 to 13, **characterised in that** a gas mixture, especially air, is the starting material, from which a gas component, especially oxygen, will be separated as a product gas, wherein preferably the thermal energy of the product gas obtained on the second electrode (5) or a gaseous by-product which is obtained on the first electrode (2) is used in a thermal energy reclamation circuit for heating the starting material.

15. A method according to one of the claims 11 to 14, **characterised in that** the operating temperature (T_{B}) is measured and adjusted to a fixed value.

## Revendications

1. Cellule photoélectrochimique (1) pour permettre la décomposition sous l'action de l'énergie solaire d'une substance de départ en particulier d'eau ou de dioxyde de carbone en un gaz produit associé en particulier de l'hydrogène ou du monoxyde de carbone comprenant une conduite d'entrée (7) du produit de départ et une conduite de sortie (9) du gaz produit obtenu, comprenant une première électrode (2) exposée en fonctionnement à un rayonnement solaire (3', 3") en un matériau photo-électriquement actif et une seconde électrode (5), les électrodes (2, 5) étant reliées entre elles dans un circuit formé par l'intermédiaire d'un conducteur d'électrons (4) pour permettre le transport d'électrons excités par le rayonnement solaire (3', 3") dans la première électrode (2) et d'un conducteur d'ions (6) pour permettre le transport d'ions formés par décomposition du produit de départ,
**caractérisé en ce qu'**
en tant que conducteur d'ions (6) il est prévu un matériau solide thermiquement résistant à une température de fonctionnement (TB) ≥ 300°C de préférence ≥ 500°C situé entre les électrodes (2, 5).

2. Cellule photoélectrochimique (1) conforme à la revendication 1,
**caractérisée en ce que**
l'électrolyte est constituée par un matériau en oxyde solide en particulier du dioxyde de zirconium (Zr02) ou un oxyde mixte de lanthane de préférence du zirkonate de lanthane (LaZr03) ou du cérate de lanthane (LaCe03), le matériau en oxyde solide étant de préférence doté par un métal de terres rares, en particulier de l'yttrium.

3. Cellule photoélectrochimique (1) conforme à la revendication 1 ou 2,
**caractérisée en ce qu'**
en tant que matériau photoélectriquement actif de la première électrode (2) il est prévu un oxyde métallique mixte, de préférence ayant la structure de la pérovskite, en particulier du titanate des trontium (SrTi03) ou du tantalate de potassium (KTa03), de préférence, l'oxyde de métal mixte ayant la structure de la pérovskite de la première électrode (2) étant doté par une substance acceptrice, en particulier du fer.

4. Cellule photoélectrochimique (1) conforme à l'une des revendications 1 à 3,
**caractérisée en ce que**
la première électrode est réalisée en oxyde de métal de transition (MeOx), de préférence Fe203, CoO, Cu20, NiO, SnO2, Ti02, W03 ou ZnO, et/ou la seconde électrode (5) est réalisée en un matériau catalytiquement actif, en particulier Ru02, LaSrMn03, Pt, un mélange métal-céramique, de préférence Ni-YSZ ou Ni.

5. Cellule photoélectrochimique (1) conforme à l'une des revendications 1 à 4,
**caractérisée en ce que**
le conducteur d'électrons (4) comporte une source de tension ou une source de courant (15) pour assister le transport des électrons excités par le rayonnement solaire (3', 3").

6. Cellule photoélectrochimique (1) conforme à l'une des revendications 1 à 5,
**caractérisée en ce qu'**
une des électrodes (2, 5) est reliée à une conduite d'évacuation (11) d'un sous produit gazeux formé par la décomposition du produit de départ, en particulier de l'oxygène.

7. Cellule photoélectrochimique (1) conforme à l'une des revendications 1 à 6,
**caractérisée en ce qu'**
entre l'une des électrodes (2, 5) et l'électrolyte il est prévu une couche catalytique ou conductrice d'électrons (16) en particulier en Ag, Au, Pt, Ru02, Ni, Ni-YSZ, ou LaSrMn03 ou LaSrCo03.

8. Cellule photoélectrochimique (1) conforme à l'une des revendications 1 à 7,
**caractérisée en ce qu'**
à la première électrode (2) est associé un dispositif (19) permettant de focaliser le rayonnement solaire (3') incident qui est susceptible d'augmenter l'intensité du rayonnement solaire (3") focalisé sur la première électrode (2) d'au moins 30 fois, de préférence d'au moins 50 fois par rapport au rayonnement solaire (3') incident.

9. Cellule photoélectrochimique (1) conforme à l'une des revendications 1 à 8,
**caractérisée en ce que**
les électrodes (2, 5) et l'électrolyte sont logées dans un boîtier plat (13) permettant obtenir un panneau (12) qui comporte une fenêtre d'entrée (14) perméable à la lumière recouvrant la première électrode (2) en particulier une vitre.

10. Cellule photoélectrochimique (1) conforme à la revendication 9,
**caractérisée en ce que**
le boîtier (13) est enveloppé par un corps isolant (18) qui comporte un évidement correspondant à la fenêtre d'entrée (14).

11. Procédé de décomposition sous l'action de l'énergie solaire d'un produit de départ en particulier d'eau ou de dioxyde carbone en un gaz produit associé, en particulier de l'hydrogène ou du monoxyde de calcium selon lequel on excite au moyen d'un rayonnement solaire (3', 3") dans une première électrode photoélectriquement active (2), des porteurs de charge sous la forme de paires électrons trous qui sont conduits vers une seconde électrode (5), on conduit le produit de départ décomposé par les porteurs de charge excités à l'une des électrodes (2, 5), on produit des ions qui sont transportés dans un circuit fermé vers l'autre électrode (2, 5) respective, et on évacue le gaz produit obtenu, **caractérisé en ce que**
le transport des ions entre les électrodes (2, 5) est effectué par l'intermédiaire d'un électrolyte constitué par un matériau solide, en particulier un matériau en oxyde solide résistant thermiquement à une température de fonctionnement (TB) ≥ 300°C de préférence ≥ 500°C.

12. Procédé conforme à la revendication 11,
**caractérisé en ce que**
la première électrode (2) est soumise à un rayonnement solaire concentré (3") dont l'intensité est augmentée d'au moins trente fois de préférence d'au moins cinquante fois par rapport à l'intensité du rayonnement solaire (3') incident, de préférence, la température de fonctionnement (T_{B}) étant obtenue lors d'un processus de chauffage au moyen d'une source de chaleur externe (22) en particulier une installation solaire.

13. Procédé conforme à la revendication 11 ou 12,
**caractérisé en ce que**
pour permettre la décomposition de l'eau, on transfère en tant que produit de départ de la vapeur d'eau surchauffée à une température d'au moins 300° Celsius, de préférence d'au moins 500° Celsius, et, de préférence, pour permettre la décomposition de dioxyde de carbone on transfère en tant que produit de départ du dioxyde de carbone à une température d'au moins 600° Celsius, de préférence de plus de 700° Celsius.

14. Procédé conforme à l'une des revendications 11 à 13,
**caractérisé en ce que**
le produit de départ est un mélange gazeux, par exemple de l'air, dont une partie gazeuse, en particulier de l'oxygène est séparée en tant que gaz produit, et de préférence, l'énergie thermique du gaz produit obtenu au niveau de la seconde électrode (5) ou d'un sous produit gazeux obtenu au niveau de la première électrode (2) est utilisée dans un circuit de récupération d'énergie thermique pour chauffer le produit de départ.

15. Procédé conforme à l'une des revendications 11 à 13,
**caractérisé en ce que**
la température de fonctionnement (T_{B}) est réglée à une valeur fixée.
